(19) Europäisches Patentamt
European Patent Office
Office européen des brevets

(11) **EP 4 418 588 A1**

(12) **EUROPEAN PATENT APPLICATION**
published in accordance with Art. 153(4) EPC

(43) Date of publication:
**21.08.2024 Bulletin 2024/34**

(51) International Patent Classification (IPC):
**H04L 5/00** (2006.01)    **H04L 27/26** (2006.01)
**H04L 27/04** (2006.01)

(21) Application number: **22889379.8**

(52) Cooperative Patent Classification (CPC):
**H04L 5/00; H04L 27/04; H04L 27/26; Y02D 30/70**

(22) Date of filing: **03.11.2022**

(86) International application number:
**PCT/CN2022/129598**

(87) International publication number:
**WO 2023/078358 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 CN 202111301685**

(71) Applicant: **Huawei Technologies Co., Ltd.
Shenzhen, Guangdong 518129 (CN)**

(72) Inventors:
• **QU, Weilin
Shenzhen, Guangdong 518129 (CN)**
• **WU, Yiling
Shenzhen, Guangdong 518129 (CN)**
• **JIN, Zhe
Shenzhen, Guangdong 518129 (CN)**
• **CHEN, Jun
Shenzhen, Guangdong 518129 (CN)**
• **LUO, Zhihu
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND DEVICE**

(57) This application provides a communication method and apparatus. The communication method includes: A transmitting end device generates an orthogonal frequency division multiplexing OFDM time domain signal, where the OFDM time domain signal includes a plurality of amplitude shift keying modulation symbols arranged in time domain; and the transmitting end device sends the OFDM time domain signal to a receiving end device. According to the communication method provided in this application, an OFDM time domain signal generated by a transmitting end includes a plurality of amplitude shift keying modulation symbols, so that a data transmission rate can be improved.

FIG. 4

**Description**

This application claims priority to Chinese Patent Application No. 202111301685.X, filed with the China National Intellectual Property Administration on November 4, 2021 and entitled "COMMUNICATION METHOD AND APPARATUS", which is incorporated herein by reference in its entirety.

**TECHNICAL FIELD**

This application relates to the communication field, and more specifically, to a communication method and an apparatus.

**BACKGROUND**

With wider application of machine type communication (machine type communication, MTC) and internet of things (internet of things, IoT) communication in a new radio (new radio, NR) communication system, a quantity of IoT devices is increasing, and the industry has a stronger requirement for reducing costs and power consumption of the IoT devices. Specifically, to reduce the power consumption of the devices, information is carried at a transmitting end by using an amplitude shift keying modulation symbol, and a signal is received at a receiving end by using an envelope detector circuit, so that power consumption of a receiver can be reduced.

Orthogonal frequency division multiplexing (orthogonal frequency division multiplexing, OFDM) is widely used in a long term evolution (long term evolution, LTE) system and NR. In OFDM systems of LTE and NR, a terminal device having an energy saving requirement receives a signal by using amplitude shift keying modulation and an envelope detector receiver. In this case, how to improve a data transmission rate becomes an urgent problem to be resolved.

**SUMMARY**

This application provides a communication method, and the communication method can improve a data transmission rate.

According to a first aspect, a communication method is provided. The communication method may be performed by a transmitting end device, or may be performed by a chip or a circuit disposed in a transmitting end device. This is not limited in this application. For ease of description, an example in which the method is performed by the transmitting end device is used below for description.

The communication method includes: The transmitting end device generates a first orthogonal frequency division multiplexing OFDM time domain signal, where the first OFDM time domain signal includes N first modulation symbols arranged in time domain, and the first modulation symbol is an amplitude shift keying modulation symbol; and the transmitting end device sends the first OFDM time domain signal to a receiving end device, where N is an integer greater than or equal to 2.

One OFDM time domain signal includes a plurality of amplitude shift keying modulation symbols, so that a data transmission rate can be improved, to improve communication efficiency.

With reference to the first aspect, in some implementations of the first aspect, the N first modulation symbols do not overlap each other in time domain.

The N amplitude shift keying modulation symbols included in the first OFDM time domain signal do not overlap each other in time domain, so that performance of detecting the amplitude shift keying modulation symbol by a receiver can be improved.

With reference to the first aspect, in some implementations of the first aspect, that the transmitting end device generates a first OFDM time domain signal includes: The transmitting end device generates a first frequency domain sequence; and the transmitting end device generates the first OFDM time domain signal based on the first frequency domain sequence, where there is a mapping relationship between the first frequency domain sequence and the N first modulation symbols.

In the communication method provided in this application, the N first modulation symbols are generated through mapping by generating the first frequency domain sequence. In comparison with a method in which the N first modulation symbols are directly generated in time domain, in the method provided in this application, the time domain signal obtained through mapping maintains orthogonality with an existing OFDM system in frequency domain, so that spectrum leakage can be avoided, interference to transmission of the existing OFDM system in frequency domain is small, impact on performance of the existing OFDM system is reduced, and the method can better coexist with the existing OFDM system. The existing OFDM may be an LTE system, an NR system, or the like.

With reference to the first aspect, in some implementations of the first aspect, that the transmitting end device generates a first frequency domain sequence includes: The transmitting end device generates the first frequency domain sequence based on a second frequency domain sequence, where a time domain signal mapped to the first frequency domain sequence includes a part of or all time domain signals mapped to the second frequency domain sequence.

With reference to the first aspect, in some implementations of the first aspect, the time domain signal mapped to the second frequency domain sequence includes N second modulation symbols. The N second modulation symbols include at least one amplitude shift keying modulation symbol 1 and one amplitude shift keying modulation symbol 0. The second modulation symbol is an amplitude shift keying modulation symbol.

The second frequency domain sequence includes at least one amplitude shift keying modulation symbol 1 and one amplitude shift keying modulation symbol 0, and a specific form is not limited. For transmission of amplitude shift keying modulation information, if amplitude shift keying modulation symbols are all amplitude shift keying modulation symbols 1 or amplitude shift keying modulation symbols are all amplitude shift keying modulation symbols 0 during continuous transmission, a time-domain signal boundary confusion occurs in the receiver. This severely affects the performance of detecting the amplitude shift keying modulation symbol. Therefore, line coding is usually for modulating an original information bit, so that a case in which the amplitude shift keying modulation symbols are all the amplitude shift keying modulation symbols 1 during the continuous transmission does not occur in the system.

With reference to the first aspect, in some implementations of the first aspect, that the transmitting end device generates the first frequency domain sequence based on a second frequency domain sequence includes: The transmitting end device generates M third frequency domain sequences based on the second frequency domain sequence; and the transmitting end device generates the first frequency domain sequence based on the M third frequency domain sequences, where there is a cyclic shift relationship between the second frequency domain sequence and each of the M third frequency domain sequences in time domain.

That there is a cyclic shift relationship between the second frequency domain sequence and a third frequency domain sequence in time domain may be understood as follows: A time domain signal mapped to the third frequency domain sequence may be obtained by performing a cyclic shift on the time domain signal mapped to the second frequency domain sequence.

For example, the second frequency domain sequence is mapped to subcarriers, and an OOK modulation symbol obtained through IFFT transform to the time domain is {10000000} (or an OOK modulation symbol is {ON, OFF, OFF, OFF, OFF, OFF, OFF, OFF}). One third frequency domain sequence in the M third frequency domain sequences is mapped to the subcarriers, and an OOK modulation symbol obtained through IFFT transform to the time domain is {00010000} (or an OOK modulation symbol is {OFF, OFF, OFF, ON, OFF, OFF, OFF, OFF}). The OOK modulation symbol {00010000} may be obtained by performing a 3-bit cyclic shift on the OOK modulation symbol { 10000000} in time domain, and therefore, a cyclic shift value is 3.

With reference to the first aspect, in some implementations of the first aspect, that the transmitting end device generates the first frequency domain sequence based on a second frequency domain sequence includes: The transmitting end device generates M third frequency domain sequences based on the second frequency domain sequence; and the transmitting end device generates the first frequency domain sequence based on the M third frequency domain sequences, where L first elements included in the second frequency domain sequence are the same as L second elements included in one of the M third frequency domain sequences, and the L first elements and the L second elements are mapped to the frequency domain in different orders, where L is a positive integer. An order of mapping the L first elements to the frequency domain may be understood as an order of mapping the first elements (for example, $\{a_0,a_1,...,a_{L-1}\}$) to subcarriers $e_0,e_1,...,e_{L-1}$, and an order of mapping the L second elements to the frequency domain may be understood as an order of mapping the second elements (for example, $\{ a_{L-1},..,a_1,a_0\}$) to subcarriers $e_0,e_1,...,e_{L-1}$.

The N amplitude shift keying modulation symbols carried in the first OFDM time domain signal have a plurality of values, each value corresponds to one frequency domain sequence (the first frequency domain sequence) in frequency domain. For example, N=8, and one value of eight OOK modulation symbols is {10000000}, and the other value is {10000001}. A frequency domain sequence corresponding to a value of the N amplitude shift keying modulation symbols is a frequency domain sequence obtained by performing time-frequency transform on time domain signals of the N amplitude shift keying modulation symbols. The time-frequency transform may be Fourier transform. For example, time domain sampling is performed on the time domain signals of the N amplitude shift keying modulation symbols, and then the time domain signals are transformed to the frequency domain through FFT, to obtain the frequency domain sequence.

If a frequency domain sequence corresponding to each value of the N amplitude shift keying modulation symbols is stored at a transmitting end, a storage amount of the transmitting end device and complexity of the transmitting end device are increased. However, when the first frequency domain sequence is generated based on the second frequency domain , the frequency domain sequence corresponding to each value of the N amplitude shift keying modulation symbols does not need to be stored, so that the storage amount of the transmitting end device and the complexity of the transmitting end device are reduced.

With reference to the first aspect, in some implementations of the first aspect, that the transmitting end device generates the first frequency domain sequence based on the M third frequency domain sequences includes: The transmitting end device adds the M third frequency domain sequences to obtain the first frequency domain sequence.

With reference to the first aspect, in some implementations of the first aspect, that the transmitting end device generates M third frequency domain sequences based on the second frequency domain sequence includes: The transmitting end device generates the M third frequency domain sequences based on the second frequency domain sequence and M phase factors. An $i^{th}$ frequency domain sequence in the M third frequency domain sequences is generated based on the second frequency domain sequence and an $i^{th}$ phase factor $e^{j\varphi i}$ in the M phase factors, and after being cyclically shifted by a length of $T_i$ amplitude shift keying modulation symbols in time domain, the time domain signal mapped to the second frequency domain sequence is a time domain signal mapped to the $i^{th}$ frequency domain sequence; and $e^{j\varphi i}$ and $T_i$ satisfy the following formula:

$$e^{j\varphi_i} = e^{j\frac{2\pi}{N}*T_i}.$$

The transmitting end device generates different frequency domain sequences based on the foregoing different phase factors, so that a cyclic shift effect in time domain can be met, and a combination of the N sent amplitude shift keying modulation symbols is obtained.

With reference to the first aspect, in some implementations of the first aspect, a $k^{th}$ element $b_k$ in the $i^{th}$ frequency domain sequence, a $k^{th}$ element $a_k$ in the second frequency domain sequence, and the $i^{th}$ phase factor $e^{j\varphi i}$ in the M phase factors satisfy the following relationship: $b_k = a_k * e^{j\frac{2\pi}{Q}k} * e^{j\varphi_i}$, where Q is a positive integer, k is a positive integer less than or equal to L, and L is a length of the third frequency domain sequence.

With reference to the first aspect, in some implementations of the first aspect, the L first elements and the L second elements are mapped to frequency domain in reverse orders.

Different combinations of the N first modulation symbols in the OFDM time domain signal are obtained by using different sequences of mapping sequence elements to frequency domain subcarriers. Elements of a sequence stored in the transmitting end device remain unchanged, but mapping sequences are different. This effectively reduces the storage amount of the device and the complexity of the device.

With reference to the first aspect, in some implementations of the first aspect, M and N satisfy the following relationship: N = MP , where P is a positive integer. For example, P is equal to 1, 2, or 4.

In a possible implementation, P is 1 or an even number; or P=$2^x$, and x is a nonnegative integer. When P=1, it is equivalent to that there is no line code coding. When P>1, P is a factor of the line code coding. To be specific, P bits are obtained through the line code coding performed on one original information bit.

A value of the factor P of the line code coding is considered, so that a bit carried in the N first modulation symbols included in the OFDM time domain signal sent by a transmitting end device side meets a coding form of line code. This helps improve demodulation performance of information detected by a receiving end.

With reference to the first aspect, in some implementations of the first aspect, the N first modulation symbols carry N bits, and the N bits include any one of the following: The N bits are information bits to be transmitted; or the N bits are bits obtained through the line coding performed on information bits to be transmitted, where the line coding factor is P.

With reference to the first aspect, in some implementations of the first aspect, the method further includes: The transmitting end device sends indication information to the receiving end device.

The indication information indicates at least one of the following: N, a relationship between a duration of each of the N first modulation symbols and a duration of the first OFDM time domain signal, or a subcarrier spacing corresponding to the duration of the first OFDM time domain signal; or

at least one of N, a relationship between a duration of each of the N first modulation symbols and a duration of the first OFDM time domain signal, and a subcarrier spacing corresponding to the duration of the first OFDM time domain signal is predefined.

In an indication or predefined manner, the receiving end device effectively obtains symbol duration information of the first modulation symbol, so that the receiving end device can effectively detect the first modulation symbol.

With reference to the first aspect, in some implementations of the first aspect, the first OFDM time domain signal indicates one of the following identifiers: an identifier of a terminal device, an identifier of a terminal device group to which the terminal device belongs, a part of the identifier of the terminal device, or a part of the identifier of the terminal device group to which the terminal device belongs.

The identifier of the terminal device or the part of the identifier is indicated, so that the terminal device can be woken up in a timely manner in a sleep state. This improves an energy saving effect of the terminal device.

According to a second aspect, a communication method is provided. The communication method may be performed by a receiving end device, or may be performed by a chip or a circuit disposed in a receiving end device.

This is not limited in this application. For ease of description, an example in which the method is performed by the receiving end device is used below for description.

The communication method includes: The receiving end device receives a first orthogonal frequency division multiplexing OFDM time domain signal from a transmitting end device; the receiving end device determines that the first OFDM time domain signal includes N first modulation symbols arranged in time domain, where the first modulation symbol is an amplitude shift keying modulation symbol, where N is an integer greater than or equal to 2.

In the communication method provided in this application, the OFDM time domain signal received by the receiving end device includes a plurality of amplitude shift keying modulation symbols, so that a data transmission rate can be improved, to improve communication efficiency.

With reference to the second aspect, in some implementations of the second aspect, the method further includes: The receiving end device receives indication information from the transmitting end device, where the indication information indicates at least one of the following: N, a relationship between a duration of each of the N first modulation symbols and a duration of the first OFDM time domain signal, or a subcarrier spacing corresponding to the duration of the first OFDM time domain signal; or

at least one of N, a relationship between a duration of each of the N first modulation symbols and a duration of the first OFDM time domain signal, and a subcarrier spacing corresponding to the duration of the first OFDM time domain signal is predefined.

In an indication or predefined manner, the receiving end device effectively obtains symbol duration information of the first modulation symbol, so that the receiving end device can effectively detect the first modulation symbol.

With reference to the second aspect, in some implementations of the second aspect, the first OFDM time domain signal indicates one of the following identifiers: an identifier of a terminal device, an identifier of a terminal device group to which the terminal device belongs, a part of the identifier of the terminal device, or a part of the identifier of the terminal device group to which the terminal device belongs.

The identifier of the terminal device or the part of the identifier is indicated, so that the terminal device can be instantly woken up in a sleep state or perform effective communication. This improves an energy saving effect of the terminal device.

According to a third aspect, a communication apparatus is provided. The communication apparatus includes a processor, configured to implement functions of the transmitting end device in the method described in the first aspect.

Optionally, the communication apparatus may further include a memory. The memory is coupled to the processor. The processor is configured to implement the functions of the transmitting end device in the method described in the first aspect.

In a possible implementation, the memory is configured to store program instructions and data. The memory is coupled to the processor. The processor may invoke and execute the program instructions stored in the memory, to implement the functions of the transmitting end device in the method described in the first aspect.

Optionally, the communication apparatus may further include a communication interface. The communication interface is used by the communication apparatus to communicate with another device. The communication interface may be a transceiver, an input/output interface, a circuit, or the like.

In a possible design, the communication apparatus includes the processor and the communication interface.

The processor is configured to run a computer program, to enable the communication apparatus to implement any method described in the first aspect.

The processor communicates with the outside through the communication interface.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fourth aspect, a communication apparatus is provided. The communication apparatus includes a processor, configured to implement functions of the receiving end device in the method described in the second aspect.

Optionally, the communication apparatus may further include a memory. The memory is coupled to the processor. The processor is configured to implement the functions of the receiving end device in the method described in the second aspect.

In a possible implementation, the memory is configured to store program instructions and data. The memory is coupled to the processor. The processor may invoke and execute the program instructions stored in the memory, to implement the functions of the receiving end device in the method described in the second aspect.

Optionally, the communication apparatus may further include a communication interface. The communication interface is used by the communication apparatus to communicate with another device. The communication interface may be a transceiver, an input/output interface, a circuit, or the like.

In a possible design, the communication apparatus includes the processor and the communication interface.

The processor is configured to run a computer program, to enable the communication apparatus to implement any method described in the second aspect.

The processor communicates with the outside through the communication interface.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a fifth aspect, this application provides a computer-readable storage medium. The computer-readable storage medium stores instructions. When the instructions are run on a computer, the computer is enabled to perform the methods in the foregoing aspects.

According to a sixth aspect, this application provides a computer program product including instructions. When the computer program product runs on a computer, the computer is enabled to perform the methods in the foregoing aspects.

According to a seventh aspect, a communication system is provided, including the communication apparatus shown in the third aspect and the communication apparatus shown in the fourth aspect.

According to an eighth aspect, a chip apparatus is provided, including a processing circuit. The processing circuit is configured to invoke a program from a memory and run the program, to enable a communication device in which the chip apparatus is installed to perform the method according to any one of the possible implementations of the first aspect and the second aspect.

## BRIEF DESCRIPTION OF DRAWINGS

FIG. 1 is a diagram of a communication system to which this application is applicable;

FIG. 2 is a diagram of a signal processing method in 802.11ba;

FIG. 3 is a diagram of a waveform;

FIG. 4 is a schematic flowchart of a communication method according to an embodiment of this application;

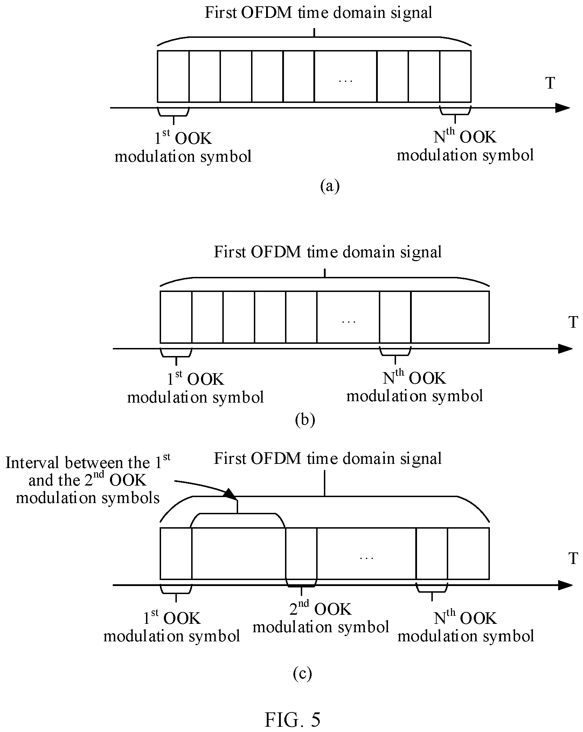

(a) to (c) in FIG. 5 are diagrams of a relationship between a first OFDM time domain signal and N first modulation symbols;

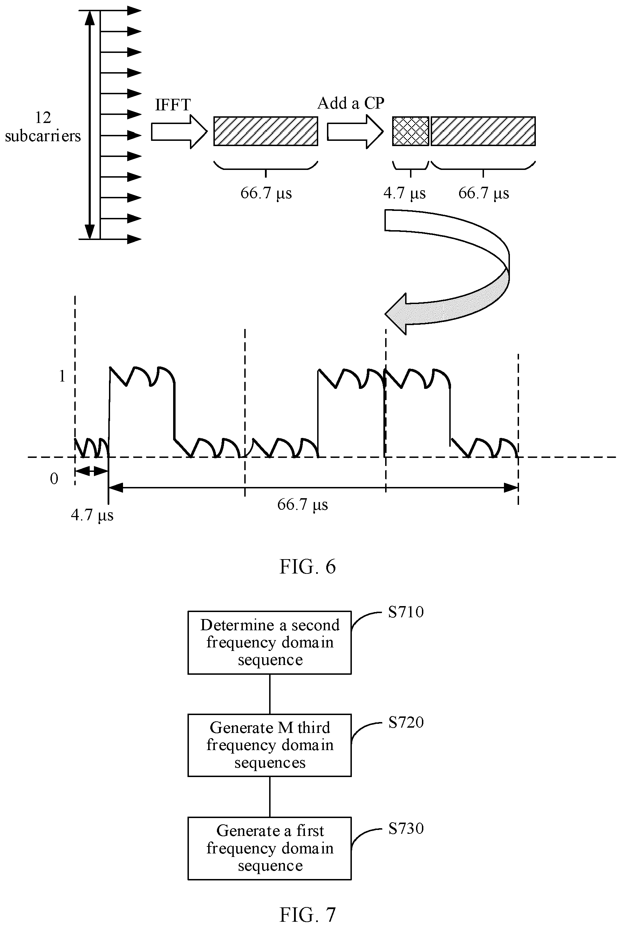

FIG. 6 is a diagram of generating a first OFDM time domain signal according to an embodiment of this application;

FIG. 7 is a schematic flowchart of generating a first frequency domain sequence according to an embodiment of this application;

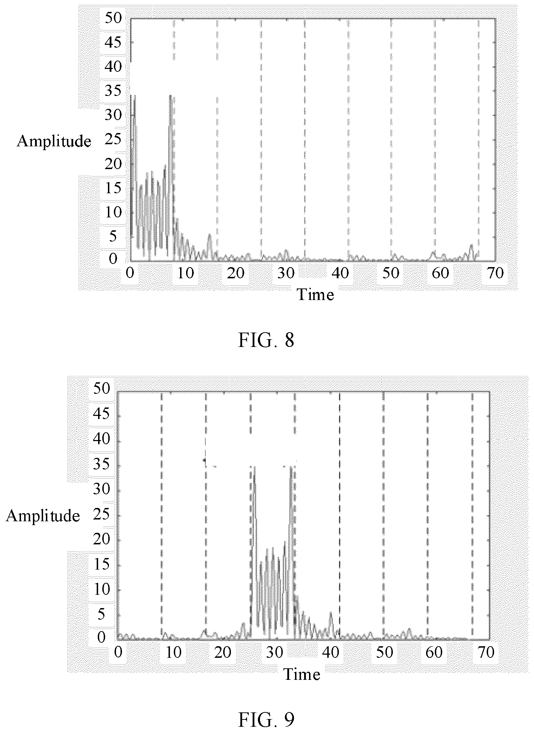

FIG. 8 is a pattern of a time domain signal mapped to a second frequency domain sequence in time domain;

FIG. 9 is a pattern of a time domain signal mapped to a third frequency domain sequence in time domain;

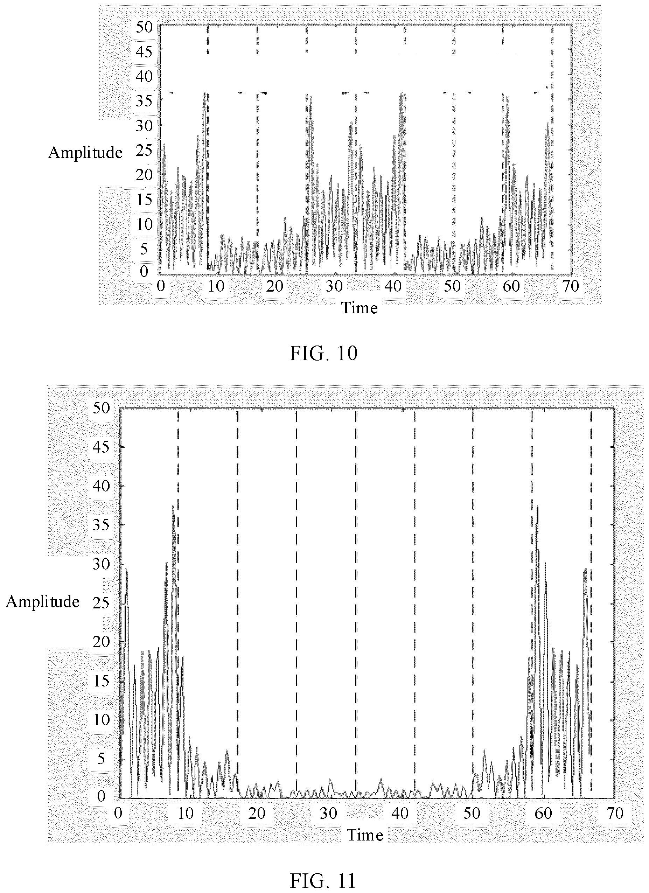

FIG. 10 is a pattern of a time domain signal mapped to a first frequency domain sequence in time domain;

FIG. 11 is another pattern of a time domain signal mapped to a first frequency domain sequence in time domain;

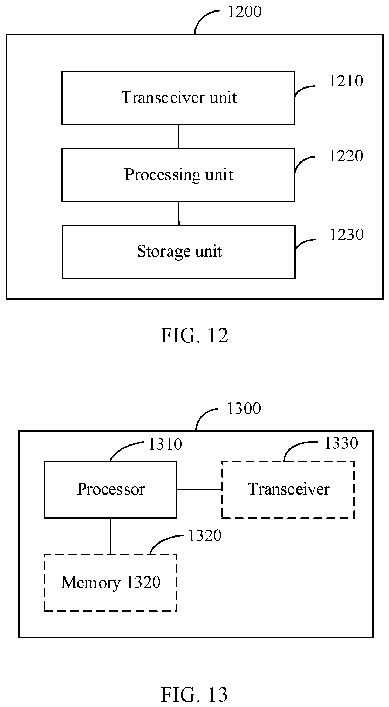

FIG. 12 is a block diagram of an apparatus 1200 according to an embodiment of this application; and

FIG. 13 is a block diagram of an apparatus 1300 according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) system, an NR system, or a future network. The 5G mobile communication system in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. The communication system may alternatively be a public land mobile network (public land mobile network, PLMN), a device-to-device (device-to-device, D2D) communication system, a machine to machine (machine to machine, M2M) communication system, an IoT communication system, or another communication system.

A terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in the IoT system. For example, the terminal device may alternatively be a label, for example, an active label or a passive label. IoT is an important part of future information technology development. A main technical feature of the IoT is to connect things to a network by using a communication technology, to implement a smart network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include sensors such as an intelligent printer, a train detector, and a gas station. Main functions of the terminal device include collecting data (some terminal devices), receiving control information and downlink data of a network device, sending an electromagnetic wave, and transmitting uplink data to the network device.

A network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be a 5G system, for example, a gNB in an NR system, a transmission point (TRP or TP), one or a group of antenna panels (including a plurality of antenna panels) of a base station in the 5G system, or a network node that constitutes a gNB or a transmission point, for example, a baseband unit (BBU) or a distributed unit (distributed unit, DU). Alternatively, the network device may be a reader/writer or the like.

In some deployments, the network device in embodiments of this application may be a central unit (central unit, CU) or a distributed unit (distributed unit, DU), or the network device includes a CU or a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be further classified into a central unit-control plane (central unit-control plane, CU-CP) and a central unit-user plane (central unit-user plane, CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of the core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents that the network device is connected to a core network device through a communication interface (for example, an Ng interface), and is connected to the DU through a communication interface (for example, an F1-C (control plane) interface). The CU-UP is connected to the DU through a communication interface (for example, an F 1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

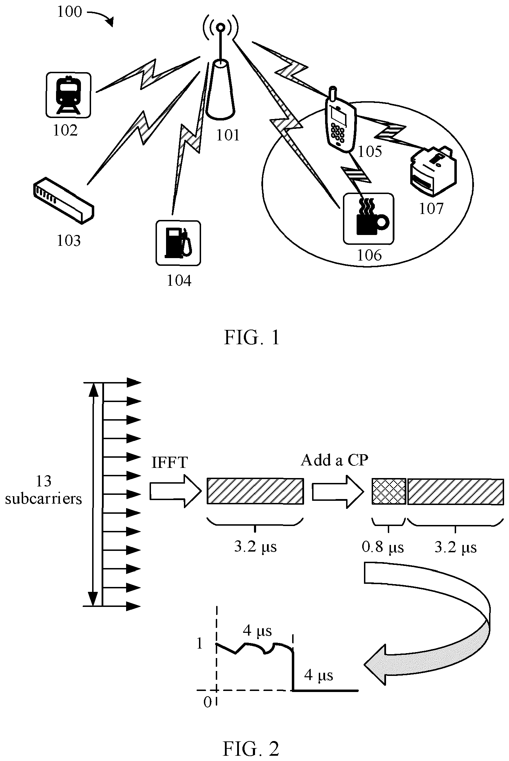

For ease of understanding embodiments of this application, a communication system shown in FIG. 1 is first used as an example to describe in detail a communication system applicable to embodiments of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device to device (device to device, D2D) technology or the like. As shown in FIG. 1, direct communication may be performed between terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 via the terminal device 105.

A plurality of antennas may be configured for each communication device. For each communication device in the communication system 100, the configured plurality of antennas may include at least one transmit antenna configured to send a signal and at least one receive antenna configured to receive a signal. Therefore, communication devices in the communication system 100 may communicate with each other by using a multi-antenna technology.

For example, the terminal device in this embodiment of this application has a low-power-consumption receiver circuit for envelope detection, and the receiver circuit is configured to receive information. For example, the communication system shown in FIG. 1 includes at least one terminal device having the low-power-consumption receiver circuit for envelope detection (for example, one or more of the terminal devices 102 to 107 have the low-power-consumption receiver circuit for envelope detection).

Specifically, the terminal device having the low-power-consumption receiver circuit for envelope detection in this embodiment of this application may be understood as an entity on a user side that is configured to receive or transmit a signal, for example, an industrial network sensor, a video surveillance camera, a wearable device (for example, a smartwatch), a water meter, an electricity meter, and another terminal device having an auxiliary circuit.

In a possible implementation, the low-power-consumption receiver circuit for envelope detection in the terminal device having the low-power-consumption receiver circuit for envelope detection may be a wake-up radio (wake-up radio, WUR) transceiver configured to receive a wake-up signal (wake-up signal, WUS).

In this embodiment of this application, a specific implementation of the auxiliary circuit in the terminal device having the auxiliary circuit is not limited, and the auxiliary circuit may be any functional entity that can receive the WUS. The functional entity may be integrated with the terminal device.

It should be understood that FIG. 1 is only a simplified diagram of an example for ease of understanding. The communication system 100 may further include another network device or another terminal device, and the device is not shown in FIG. 1.

For ease of understanding embodiments of this application, several basic concepts in embodiments of this application are briefly described. It should be understood that the basic concepts described below are briefly described by using a basic concept specified in an NR protocol as an example, but embodiments of this application are not limited to being applied only to an NR system. Therefore, standard names that appear when the NR system is used as an example for description are all functional descriptions, and specific names are not limited. The standard names indicate only a function of a device, and may be correspondingly extended to another system, for example, a system using an OFDM technology or a system using a technology similar to an OFDM technology.

1. Wake-up radio (wake-up radio, WUR).

In a communication network, a large part of energy of a device is wasted in listening performed when no signal is received. A related solution in a current conventional 802.11 protocol focuses on optimizing a sleep policy of the device. In addition to optimizing the sleep policy, another way to reduce energy waste of the device is to use a low-power-consumption WUR. In addition to a conventional main transceiver, the device further includes a WUR transceiver. After the main transceiver enters deep sleep, the low-power-consumption WUR transceiver wakes up and starts to work. If another device needs to communicate with the device, the another device first sends a wake-up signal (wake-up signal, WUS) (or referred to as a wake-up packet (wake-up packet, WUP)) to the WUR transceiver of the device. After correctly receiving the WUS sent to the WUR transceiver, the WUR transceiver wakes up the main transceiver to perform communication.

In a WUR technology, the low-power-consumption WUR transceiver is used for replacing the main transceiver to listen on a channel when a medium is idle, so that the energy waste of the device can be effectively reduced.

2. Amplitude shift keying (amplitude shift keying, ASK).

If a possible status of a digital modulation signal is in one-to-one correspondence with a binary information symbol or a baseband signal status corresponding to the binary information symbol, the digital modulation signal is referred to as a binary digital modulation signal. Performing keying by using the binary information symbol is referred to as binary amplitude keying, and is represented by ASK.

In a "binary amplitude shift keying" manner, a carrier whose amplitude is A represents a bit" 1", and carrier shutdown represents a bit 0. The reverse is also true.

The ASK is a simple modulation scheme, and is equivalent to amplitude modulation in an analog signal. The only difference is that a carrier frequency signal is multiplied by binary code. Amplitude shift is to use frequency and a phase as constants and an amplitude as variables. An information bit is transferred through an amplitude of the carrier.

3. On-off keying (On-Off Keying, OOK) modulation.

The OOK modulation is binary amplitude keying. OOK is a special example of ASK modulation. An OOK modulation symbol with a high amplitude (or an envelope, a level, energy, or the like) (where for example, the amplitude is higher than a threshold, or is a non-zero value) is referred to as an OOK modulation symbol 1, or an OOK modulation symbol ON (ON), or an OOK modulation symbol connection. An OOK modulation symbol with a low amplitude (or an envelope, a level, energy, or the like) (where for example, the amplitude is lower than a threshold, or is a zero value) is referred to as an OOK modulation symbol 0, or an OOK modulation symbol OFF (OFF), or an OOK modulation symbol disconnection. The amplitude is defined relative to an amplitude demodulation threshold of a receiver. If the amplitude is higher than the demodulation threshold, the amplitude is high. If the amplitude is lower than the demodulation threshold, the amplitude is low.

4. Phase shift keying (phase shift keying, PSK).

The phase shift keying is a modulation technology that uses a carrier phase to represent input signal information. An example in which binary phase modulation is used. When a code-element is "1", a modulated carrier and an unmodulated carrier are in the same phase; when the code-element is "0", the modulated carrier and the unmodulated carrier are in phases reverse to each other; and when the code-element is " 1" and "0", a phase difference of the modulated carriers is 180°.

5. Quadrature amplitude modulation (quadrature amplitude modulation, QAM).

An amplitude and a phase change at the same time, and the quadrature amplitude modulation belongs to non-constant envelope two-dimensional modulation. The QAM is a combination of a quadrature carrier modulation technology and multilevel amplitude keying.

Quadrature amplitude keying is a method of combining two amplitude modulation signals (ASK and PSK) into one channel. A quadrature amplitude modulation signal has two carriers of the same frequency, but a phase difference of the two carriers is 90 degrees. One signal is an I-axis signal, and the other signal is a Q-axis signal. Mathematically, one signal is represented as a sine, and the other signal is represented as a cosine. The two modulated carriers have been mixed when being transmitted. After arriving at a destination, the carriers are separated, and data is extracted separately and then mixed with original modulation information.

The QAM uses two independent baseband signals to suppress carrier double-sideband amplitude modulation of two mutually orthogonal intra-frequency carriers. Orthogonality of frequency spectrums of the modulation signals in a same bandwidth is for transmission of two channels of parallel digital information.

Common QAM modulation includes binary phase shift keying (binary phase shift keying, BPSK), quadrature phase shift keying (quadrature phase shift keying, QPSK), 16QAM, 64QAM, and the like.

6. Constellation point.

A coordinate of a modulation symbol of a modulation scheme in a coordinate system is represented as a constellation point. One coordinate axis of the coordinate system is an I axis, and represents a coordinate of an I-axis signal; and the other coordinate axis of the coordinate system is a Q-axis line, and represents a coordinate of a Q-axis signal. For example, in QSPK modulation, four modulation symbols are $\dfrac{1+j}{\sqrt{2}}$, $\dfrac{1-j}{\sqrt{2}}$, $\dfrac{-1+j}{\sqrt{2}}$, and $\dfrac{-1-j}{\sqrt{2}}$; and $j = \sqrt{-1}$. An example in which a constellation point $\dfrac{1+j}{\sqrt{2}}$ is used. $\dfrac{1}{\sqrt{2}}$ is a Q-axis coordinate, and $\dfrac{j}{\sqrt{2}}$ is an I-axis coordinate.

7. Coherent demodulation.

The coherent demodulation is also referred to as synchronous detection, and is applicable to demodulation of all linear modulation signals. A key to implementing the coherent demodulation is that a receiving end needs to restore a coherent carrier that is strictly synchronized with a modulated carrier. The coherent demodulation means inputting, by using a multiplier, a reference signal coherent with (in a same frequency and phase as) a carrier to be multiplied by a carrier.

8. Non-coherent demodulation.

When a communication receiving end recovers an original digital baseband signal from a modulated high-frequency signal, a non-coherent demodulation mode is used. In comparison with a coherent demodulation mode, the non-coherent demodulation mode refers to a demodulation mode in which carrier information does not need to be extracted. Usually, a non-coherent demodulation method has a simple circuit and is easy to implement. However, in comparison with a coherent demodulation method, the non-coherent demodulation method has a slight performance loss.

9. Envelope detection.

The envelope detection is a signal detection method in which a high-frequency signal is used as an input signal, and an envelope or an amplitude line of a low-frequency original signal is obtained through a half-wave or full-wave rectifier circuit. Based on the obtained envelope of the original signal, a receiver performs digital sampling on the envelope of the original signal, compares the envelope with an amplitude or energy threshold set by the receiver, and determines whether a transmitted signal is 1 or 0, that is, whether the signal is on or off (ON/OFF).

10. FR1 frequency band.

According to 3GPP specifications, a 5G network mainly uses two frequency bands: the FR1 frequency band and an FR2 frequency band. A frequency range of the FR1 frequency band is 450 MHz to 6 GHz, and is also referred to as a sub 6 GHz (sub 6 GHz) frequency band; and a frequency range of the FR2 frequency band is 24.25 GHz to 52.6 GHz, and is usually referred to as millimeter wave (mmWave).

11. Euclidean distance.

The Euclidean distance is also referred to as Euclidean metric (euclidean metric), is a commonly used distance definition, and refers to a real distance between two points or a natural length of a vector in m-dimensional space (that is, a distance from the point to the origin). A Euclidean distance in two-dimensional or three-dimensional space is an actual distance between two points.

12. WUR receiver.

The Institute of Electrical and Electronic Engineers (institute of electrical and electronic engineers, IEEE) 802.11 standard organization starts to discuss WUR-related content in 2017, and determines that an IEEE WUR standard is IEEE 802.11ba, enabling a receiver to receive a signal with low power consumption (for example, power consumption<1 mW), and a terminal device has two receiver links (for example, a primary receiver and a secondary receiver), where the main receiver is similar to a receiver of a conventional cellular terminal device, and no evident change is made; and a WUR receiver with the low power consumption (for example, the power consumption<1 mW) needs to be designed for the secondary receiver.

A network device sends, to the WUR receiver, an ASK or OOK modulation signal presenting an ON/OFF waveform in time domain. After receiving the modulation signal, the WUR receiver does not perform coherent demodulation by using a signal generated by a high-frequency local oscillator, which is the same as a conventional cellular OFDM signal receiver. Instead, the WUR receiver performs incoherent demodulation based on an amplitude envelope (Envelope Detector) of the signal by using an envelope detector. Because the WUR receiver does not need to generate a high-frequency local oscillator signal, power consumption of the WUR receiver is greatly reduced, and magnitude of the WUR receiver is only dozens of microwatts. This is far less than magnitude of dozens of or hundreds of milliwatts. After the WUR receiver successfully demodulates data information by using envelope detection, the WUR receiver wakes up the main receiver. In this case, the main receiver needs to be woken up to perform information transmission.

13. Sequence length.

The sequence length in this application may be understood as a quantity of elements included in a sequence.
For example, if a frequency domain sequence includes 12 elements, a length of the frequency domain sequence is 12.

14. Allocated frequency domain bandwidth.

The allocated frequency domain bandwidth is a maximum frequency domain bandwidth allocated by a network device for transmission of a signal (for example, transmission of a wake-up signal performed by a WUR), and an actual bandwidth occupied for the signal transmission is within a range of the allocated frequency domain bandwidth.

Specifically, in the IEEE 802.11ba WUR protocol, currently, operating on a 2.4 GHz or 5 GHz frequency is supported. 802.11ba supports symbols whose subcarrier spacings are 312.5 kHz, and whose OFDM time domain signal durations are 4 μs (which may be referred to as a high data rate (high data rate, HDR)) and 2 μs (which may be referred to as a low data rate (low data rate, LDR)).

FIG. 2 is a diagram of a signal processing method in 802. 11ba. A WUR signal occupies central 13 subcarriers of 20 MHz of a system, and occupies a bandwidth of approximately 4.06 MHz. A sequence is mapped to 12 subcarriers other than a center subcarrier (a subcarrier #0) in the 13 subcarriers. An element of the sequence may be selected from phase shift keying (for example, binary phase shift keying (binary phase shift keying, BPSK) or quadrature phase shift keying (quadrature phase shift keying, QPSK)) and/or quadrature amplitude (for example, 16QAM, 64QAM, or 256QAM) modulation constellation points.

For example, after the element of the sequence is determined, operations of inverse fast Fourier transform (inverse fast Fourier transform, IFFT) and cyclic prefix (cyclic prefix, CP) addition are performed by an OFDM transmitter, to generate an OFDM time domain signal. In this case, a generated 4 μs symbol is used as an ON symbol. To be specific, the WUR receiver determines, by using envelope detection, that the symbol is a sent OOK modulation symbol {1}. If no information is sent on the 13 subcarriers, an OFDM time domain signal generated after the operations of the IFFT and CP addition performed by the OFDM transmitter is also a signal without energy. In this case, the symbol is used as an OFF symbol. To be specific, the WUR receiver determines, by using envelope detection, that the symbol is an OOK modulation symbol {0}.

802.11ba supports Manchester (Manchester) line coding. For the 4 μs symbol, an information bit 0 is coded as 1010, and an information bit 1 is coded as 0101. Therefore, transmission of one piece of information needs four ON/OFF symbols, and an information transmission rate is 1 bit/(4*4 μs)=62.5 kbps.

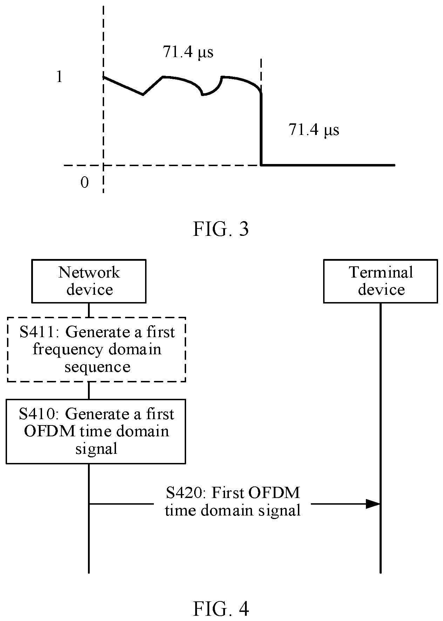

If a method for generating a waveform in the IEEE 802.11ba standard is directly introduced into NR, an ON/OFF symbol duration of a waveform is changed from 4 μs to 71.4 μs by using an example in which a subcarrier spacing is 15 kHz. FIG. 3 is a diagram of a waveform. When a subcarrier spacing such as 15 kHz, 30 kHz, or 60 kHz is used in an NR system, a duration of an OFDM time domain signal is far greater than a duration of an OFDM time domain signal of an IEEE WUR. If one ON/OFF OFDM time domain signal still carries 1-bit 1/0 information, an information transmission rate is far lower than an information rate of the WUR. For example, when the subcarrier spacing is 15 kHz, a data rate is far lower than that of the IEEE WUR. As a result, information transmission efficiency of the WUR in NR is excessively low, and wake-up efficiency of a terminal device is greatly reduced.

To avoid a disadvantage of the foregoing signal processing method, this application provides a communication method, so that one OFDM time domain signal can carry a plurality of ON/OFF information waveforms, to improve a data transmission rate.

A specific structure of an execution body of the method provided in embodiments of this application is not specifically limited in the following embodiments, provided that a program that records code of the method provided in embodiments of this application can be run to perform communication according to the method provided in embodiments of this application. For example, the method provided in embodiments of this application may be performed by a terminal device or a network device, or a functional module that can invoke and execute the program in the terminal device or the network device.

For ease of understanding of embodiments of this application, the following descriptions are provided.

First, the terms "first", "second", and various numerical numbers (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in a proper circumstance, so that a solution other than embodiments of this application can be described.

Second, in this application, "preset" may include predefined, for example, defined in a protocol. "Predefined" may be implemented by prestoring corresponding code or a corresponding table in a device (for example, including a receiving end device or a transmitting end device), or another manner that may indicate related information. A specific implementation thereof is not limited in this application.

Third, "storing" in embodiments of this application may be "being stored in one or more memories". The one or more memories may be separately disposed, or may be integrated into a coder, a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fourth, "protocols" in embodiments of this application may be standard protocols in the communication field, for example, may include a 5G protocol, a new radio (new radio, NR) protocol, and a related protocol used for a future communication system. This is not limited in this application.

Fifth, the term "and/or" in this application describes only an association relationship for describing associated objects and represents that three relationships may exist. For example, A and/or B may represent the following three cases: Only A exists, both A and B exist, and only B exists.

Without a loss of generality, the following describes in detail the communication method provided in embodiments of this application by using interaction between the transmitting end device and the receiving end device as an example.

FIG. 4 is a schematic flowchart of a communication method according to an embodiment of this application.

The method includes the following steps.

S410: A transmitting end device generates a first OFDM time domain signal.

The first OFDM time domain signal may also be referred to as a first OFDM time domain symbol, or may be understood as a first OFDM time domain waveform.

In this application, the transmitting end device may be a network device (for example, an access network device). Alternatively, the transmitting end device may be another device that sends the OFDM time domain signal.

The first OFDM time domain signal includes N first modulation symbols arranged in time domain, and the first modulation symbol is an amplitude shift keying modulation symbol.

The amplitude shift keying modulation symbol may be the ASK modulation symbol or the OOK modulation symbol (where the OOK modulation symbol may also be referred to as a 2ASK modulation symbol) in the foregoing basic concepts, or may be another signal that can present an amplitude or energy to be high or low for a period of time in time domain and that is used as an ON/OFF modulation symbol. The ON/OFF modulation symbol means that an amplitude of a signal is low for a period of time in time domain (for example, average energy or an average amplitude of the signal is lower than a specified threshold for the period of time, or signal amplitude values are all 0) and average energy or an average amplitude of the signal is high for a period of time (for example, the average energy or average amplitude of the signal is higher than a specified threshold for the period of time).

The N first modulation symbols carry N bits, and the N bits may be original information bits or bits obtained through line coding performed on the original information bits. For example, N=8, and eight first modulation symbols carry eight bits "101010101". Each of the eight modulation symbols carries one bit. For example, a modulation scheme is OOK, an OOK modulation symbol {1} represents a bit "1", and an OOK modulation symbol {0} represents a bit "0". Alternatively, an OOK modulation symbol {0} represents a bit "1", and an OOK modulation symbol {1} represents a bit "0". The N bits may be eight original information bits, or may be bits obtained through line code Manchester coding. For example, if a Manchester coding factor is 2, an original information bit is "1100", an original information bit "1" is coded as 10, an original information bit "0" is coded as 01, and coded bits are "10100101"; or if a Manchester coding factor is 4, an original information bit is "10", an original information bit "1" is coded as "1010", an original information bit "0" is coded as "0101", and coded bits are "10100101". In addition, the line coding may be pulse interval coding (Pulse Interval Encoding, PIE), or another line coding format in which the last bit is 0 after the line coding.

It should be noted that, in this embodiment of this application, a specific type of the first modulation symbol included in the first OFDM time domain signal is not limited, provided that the first modulation symbol may be a signal that presents an amplitude or energy to be high or low for a period of time in time domain.

That the first OFDM time domain signal includes N first modulation symbols arranged in time domain may be understood as that the first OFDM time domain signal carries the N first modulation symbols, for example, the first OFDM time domain signal carries one first modulation symbol for a period of time in time domain; or may be understood as that the first OFDM time domain signal is represented by the N first modulation symbols; or may be understood as that the first OFDM time domain signal includes signals corresponding to the N first modulation symbols.

The N first modulation symbols arranged in time domain may be understood as that the N first modulation symbols are consecutively arranged in time domain, or may be understood as that the N first modulation symbols are sequentially arranged in time domain.

For example, the N first modulation symbols are the 1st first modulation symbol, the 2nd first modulation symbol, ..., and an Nth first modulation symbol. Two consecutive first modulation symbols (for example, the 1st first modulation symbol and the 2nd first modulation symbol) in time domain are adjacently arranged, and there may be a gap between the two consecutive first modulation symbols (for example, there is an equal gap between the N first modulation symbols arranged in time domain). Alternatively, there may be no gap (for example, a duration of each first modulation symbol in time domain is 1/N of a duration of the first OFDM time domain signal). This is not limited in this application.

For ease of understanding, a relationship between the first OFDM time domain signal and the N first modulation symbols is described with reference to (a) to (c) in FIG. 5. For ease of description, the following uses an example in which the first modulation symbol is an OOK modulation symbol for description.

As shown in (a) in FIG. 5, the first OFDM time domain signal includes N OOK modulation symbols that are sequentially and consecutively arranged in time domain, and a sum of lengths of the NOOK modulation symbols is a length of the first OFDM time domain signal.

As shown in (b) in FIG. 5, the first OFDM time domain signal includes N OOK modulation symbols that are sequentially and consecutively arranged in time domain, and a sum of lengths of the NOOK modulation symbols is less than a length of the first OFDM time domain signal.

As shown in (c) in FIG. 5, the first OFDM time domain signal includes N OOKs, where there is an equal gap between the N OOK modulation symbols arranged in time domain sequentially. A gap (gap) exists between two consecutive first modulation symbols in the N first modulation symbols in time domain, and a sum of lengths of the N OOK modulation symbols is less than a length of the first OFDM time domain signal.

It should be understood that (a) to (c) in FIG. 5 merely represent an example of the relationship between the first OFDM time domain signal and the N first modulation symbols, and do not constitute any limitation on the protection scope of this application. For example, lengths of different first modulation symbols in the N first modulation symbols may be different.

In a possible implementation, the N first modulation symbols do not overlap each other in time domain.

The N amplitude shift keying modulation symbols included in the first OFDM time domain signal do not overlap each other in time domain, so that performance of detecting the amplitude shift keying modulation symbol by a receiver can be improved.

That the N first modulation symbols do not overlap each other in time domain may be understood as that any two of the N first modulation symbols do not overlap in time domain.

For example, an end point, in time domain, of a former first modulation symbol is a start point, in time domain, of a latter first modulation symbol in two adjacent first modulation symbols.

For another example, an end point, in time domain, of a former first modulation symbol is earlier than a start point, in time domain, of a latter first modulation symbol in two adjacent first modulation symbols.

Further, after generating the first OFDM time domain signal, the transmitting end device may send the first OFDM time domain signal to a receiving end device. A method procedure shown in FIG. 4 further includes the following steps.

S420: The transmitting end device sends the first OFDM time domain signal to the receiving end device, or the receiving end device receives the first OFDM time domain signal from the transmitting end device.

After generating the first OFDM time domain signal, the transmitting end device adds a CP corresponding to a subcarrier spacing corresponding to the first OFDM time domain signal, and then sends the first OFDM time domain signal and the CP.

The transmitting end device may send the first OFDM time domain signal in a unicast mode, or may send the first OFDM time domain signal in a broadcast mode.

In this application, the receiving end device may be a terminal device, or may be another device that performs envelope detection.

It should be noted that a transmission mode of the OFDM time domain signal is not limited in this embodiment of this application, and reference may be made to descriptions in a current conventional technology.

For example, the receiving end device may learn, in a manner indicated by indication information or a predefined manner, that the first OFDM time domain signal includes the N first modulation symbols arranged in time domain, so that the receiving end device can effectively detect the first modulation symbol.

In a possible implementation, the receiving end device may learn, based on the indication information sent by the transmitting end device, that the first OFDM time domain signal includes the N first modulation symbols arranged in time domain.

For example, the receiving end device receives the indication information from the transmitting end device, where the indication information indicates at least one of the following:

The indication information indicates N (for example, the indication information indicates N=8);
the indication information indicates a relationship between a duration of each OOK modulation symbol in the N first modulation symbols and a duration of the first OFDM time domain signal (for example, the indication information indicates that the duration of each first modulation symbol occupies 1/N of the duration of the first OFDM time domain signal); or
the indication information indicates a subcarrier spacing corresponding to a duration of the first OFDM time domain signal.

For example, if the indication information indicates that a duration of the first modulation symbol is 1/N of the duration of the first OFDM time domain signal and the subcarrier spacing of the first OFDM time domain signal is 15 kHz, a receiving end obtains the duration of the first modulation symbol after receiving the indication information.

The "duration" may also be understood as "occupied time".

In another possible implementation, the receiving end device may learn, based on a predefinition (for example, a protocol predefinition), that the first OFDM time domain signal includes the N first modulation symbols arranged in time domain.

For example, a quantity N of first modulation symbols that are included in the first OFDM time domain signal and that are arranged in time domain is predefined;

the relationship between the duration of each OOK modulation symbol in the N first modulation symbols and the duration of the first OFDM time domain signal is predefined; or
the subcarrier spacing corresponding to the duration of the first OFDM time domain signal is predefined.

For example, the receiving end device is the terminal device having the low-power-consumption receiver circuit for envelope detection described above. The low-power-consumption receiver circuit for envelope detection may be a WUR transceiver configured to receive a WUS. The WUS received and sent by the WUR transceiver in the terminal device having the low-power-consumption receiver circuit for envelope detection is one OFDM time domain signal presenting an ON/OFF waveform in time domain, and one OFDM time domain signal includes a plurality of modulation symbols. This effectively improves a downlink data transmission rate of an NR WUR.

The receiving end device obtains, based on the subcarrier spacing indicated by the indication information or the predefined subcarrier spacing, a time length of the CP corresponding to the first OFDM time domain signal. The receiving end device removes the CP at the receiver, and performs envelope detection to detect the first OFDM time domain signal. The receiving end device detects, based on the duration of the first modulation symbol indicated by the indication information or the predefined duration of the first modulation symbol, the N first modulation symbols included in the first OFDM time domain signal.

For example, the first OFDM time domain signal may further indicate one of the following identifiers:

an identifier of the terminal device, an identifier of a terminal device group to which the terminal device belongs, a part of the identifier of the terminal device, or a part of the identifier of the terminal device group to which the terminal device belongs. The identifier of the terminal device or the part of the identifier is indicated, so that the terminal device can be instantly woken up in a sleep state or perform effective communication. This improves an energy saving effect of the terminal device.

For example, the identifier of the terminal device (UE ID) is represented by 40 bits, and the first OFDM time domain signal may indicate first several bits of the UE ID.

For example, the first OFDM time domain signal carries eight OOK modulation symbols, and the eight OOK modulation symbols carry eight pieces of bit information, so that the first OFDM time domain signal may indicate eight bits. Similarly, the first OFDM time domain signal may indicate 16 bits, and the like.

For another example, the first OFDM time domain signal may further indicate all bits (for example, indicate 40 bits) of the UE ID.

For another example, the identifier of the terminal device group (UE group ID) to which the terminal device belongs is represented by 40 bits, and the first OFDM time domain signal may indicate first several bits of the UE group ID (for example, indicate eight bits or indicate 16 bits), or may indicate all bits of the UE group ID (for example, indicate 40 bits).

It should be noted that, in this embodiment of this application, a behavior performed, based on the first OFDM time domain signal, by the receiving end device after the receiving end device receives the first OFDM time domain signal is not limited. That the first OFDM time domain signal is the WUS used for waking up the terminal device and the first OFDM time domain signal is identification information is merely an example. This does not constitute any limitation on the protection scope of this application.

For example, that a transmitting end device generates a first OFDM time domain signal may be that the transmitting end device first generates a first frequency domain sequence, and then generates the first OFDM time domain signal based on the first frequency domain sequence. The N first modulation symbols are generated by generating the first frequency domain sequence. In comparison with a method in which the N first modulation symbols are obtained by performing an operation on the time domain signal, in the method provided in this application, the time domain signal obtained through mapping maintains orthogonality with an existing NR OFDM system in frequency domain, so that spectrum leakage can be avoided, interference to transmission of an NR system in frequency domain is small, impact on performance of the NR system is reduced, and the method can better coexist with the NR OFDM system.

In a possible implementation, in this embodiment of this application, that a transmitting end device generates a first OFDM time domain signal includes: The transmitting end device generates the first frequency domain sequence, and generates the first OFDM time domain signal based on the first frequency domain sequence.

For example, the transmitting end device performs Q-point IFFT transform or time domain transform on the first frequency domain sequence to obtain the first OFDM time domain signal. A value of Q is specifically related to an allocated frequency domain bandwidth. For example, the allocated frequency domain bandwidth is 20 MHz, and corresponds to Q=2048; or the allocated frequency domain bandwidth is 10 MHz, and corresponds to Q=1024.

For ease of understanding, a manner of generating the first OFDM time domain signal in this application is briefly described with reference to FIG. 6. FIG. 6 is a diagram of generating a first OFDM time domain signal according to an embodiment of this application.

A transmitting end device may first generate a first frequency domain sequence, and then generate the first OFDM time domain signal based on the first frequency domain sequence. FIG. 6 shows how to generate the first OFDM time domain signal based on the first frequency domain sequence when a subcarrier spacing is 15 KHz.

For example, if an allocated frequency domain bandwidth is 1 MHz, corresponding Q=64. In other words, a quantity of IFFT points is 64. It is assumed that a bandwidth occupied by the first frequency domain sequence mapped to the frequency domain is one physical resource block (physical resource block, PRB) (that is, 12 subcarriers shown in FIG. 6), and each subcarrier occupies 15 KHz (that is, the subcarrier spacing is 15 KHz). There are a total of Q=64 subcarriers, and the first frequency domain sequence occupies a middle PRB. A manner in which the first frequency domain sequence is mapped to the 12 middle subcarriers is as follows.

The first frequency domain sequence includes 12 elements, and the 12 elements are respectively $a_1$, $a_2$, ..., and $a_{12}$. Q=64 corresponds to 64 subcarriers, and the 64 subcarriers are respectively represented as $c_1$, $c_2$, ..., and $c_{64}$ in ascending order of the frequency domain, $a_1$, $a_2$, ..., and $a_{12}$ are carried on $c_{27}$, $c_{28}$, ..., and $c_{38}$ respectively. Other subcarriers are mapped to 0, which is also referred to as zero padding. In other words, subcarriers $c_1$ to $c_{26}$ are mapped to 0. That the subcarrier is mapped to 0 may also be understood as that an OOK modulation symbol carried by the subcarrier is 0, or an OOK modulation symbol carried by the subcarrier is empty.

Then, a first frequency domain sequence S={0, ..., 0 (26 zeros), $a_1$, $a_2$, ..., $a_{12}$, 0, ..., 0 (26 zeros)} whose length is 64 is obtained.

Further, 64-point IFFT is performed on the first frequency domain sequence S, where 64 time domain sampling points D included in the first OFDM time domain signal are {$d_1$, $d_2$, ..., $d_{64}$}. The first OFDM time domain signal includes a plurality of first modulation symbols (as shown in FIG. 6, a first modulation symbol included in the first OFDM time domain signal is {100110}).

The transmitting end device sends the first OFDM time domain signal and a CP signal.

In this implementation, the method shown in FIG. 4 further includes the following step.

S411: The transmitting end device generates a first frequency domain sequence.

There is a mapping relationship between the first frequency domain sequence and the N first modulation symbols.

For example, that there is a mapping relationship between the first frequency domain sequence and the N first modulation symbols may be understood as follows: A time domain signal corresponding to the first frequency domain sequence includes the N first modulation symbols; or may be understood as follows: An OFDM time domain signal obtained by performing mapping or time domain transform (for example, IFFT transform) on the first frequency domain sequence includes the N first modulation symbols. A subcarrier spacing mapped to the first frequency domain sequence is any one of subcarrier spacings such as 15 kHz, 30 kHz, and 60 kHz.

For example, the first frequency domain sequence described above is $a_1$, $a_2$, ..., and $a_{12}$, Q=64, and the subcarrier spacing is 15 KHz. A time domain sampling point D={$d_1$, $d_2$, ..., $d_{64}$} is obtained by performing 64-point IFFT on a sequence S={0, ..., 0 (26 zeros), $a_1$, $a_2$, ..., $a_{12}$, 0, ..., 0 (26 zeros)} whose length is 64. The time domain sampling point D includes Q=64 time domain sampling points. A time domain interval between two adjacent time domain sampling points of D is t. For example, a time domain interval between $d_2$ and $d_3$ is t. According to a Fourier transform theory, a reciprocal of a subcarrier spacing of a frequency is a symbol length of a time domain obtained through IFFT transform, and a duration of the domain signal D in time domain is 64t=1/15K (second). A transmitting end performs digital-to-analog conversion on D, and then sends D through a carrier.

In this example, a duration of an OOK modulation symbol in time domain is 1/8 of a duration of an OFDM time domain signal. A time length occupied by one OOK modulation symbol in time domain is also a time length of K=8 time domain sampling points. Every K time domain sampling points of D represent one OOK modulation symbol. For example, K=8, and 64 sampling points represent eight OOK modulation symbols.

For example, the first frequency domain sequence generated by the transmitting end device is mapped to subcarriers, and an OOK modulation symbol combination obtained through IFFT transform to the time domain is {10011001}. In other words, the modulation symbol combination is a combination of amplitudes or energy, for example, {ON, OFF, OFF, ON, ON, OFF, OFF, ON}.

The receiving end performs envelope detection on the received time domain signal. After digital sampling (for example, 64 sampling points), average energy or an average amplitude of every K=8 time domain sampling points is compared with a preset demodulation threshold. If the average energy is lower than the demodulation threshold of the receiving end, it is determined that an OOK modulation symbol 0 (OFF) is used. If the energy is higher than the demodulation threshold, it is determined that an OOK modulation symbol 1 (ON) is used.

In a possible implementation, in this embodiment of this application, that the transmitting end device generates a first frequency domain sequence includes:

The first frequency domain sequence may be predefined; or the first frequency domain sequence is associated with a value of N based on N OOK modulation symbols carried by one OFDM time domain signal. For example, N=8 is associated with the 1st first frequency domain sequence, and N=4 is associated with the 2nd first frequency domain sequence.

Alternatively, the transmitting end device generates the first frequency domain sequence based on a second frequency domain sequence, where a time domain signal mapped to the first frequency domain sequence includes a part of or all time domain signals mapped to the second frequency domain sequence.

For example, the second frequency domain sequence may be a frequency domain sequence generated by the transmitting end device or predefined in a protocol, and may be referred to as a base sequence. The second frequency domain sequence can be used for generating the first frequency domain sequence.

For example, the second frequency domain sequence is mapped to subcarriers, and an OOK modulation symbol {10000000} is obtained through IFFT transform to the time domain, while the first frequency domain sequence is mapped to the subcarriers, and an OOK modulation symbol { 10011001} is obtained through IFFT transform to the time domain, where the first three bits of { 10000000} are the same as those of { 10011001}. It may be understood as that the time domain signal mapped to the first frequency domain sequence includes a part of OOK modulation symbols mapped to the second frequency domain sequence.

For another example, the second frequency domain sequence is mapped to subcarriers, and an OOK modulation symbol {10011001} is obtained through IFFT transform to the time domain, while the first frequency domain sequence is mapped to the subcarriers, and an OOK modulation symbol {10011001} is obtained through IFFT transform to the time domain. It may be understood as that the time domain signal mapped to the first frequency domain sequence includes all OOK modulation symbols mapped to the second frequency domain sequence. In this case, the second frequency domain sequence may be directly considered as the first frequency domain sequence.

Specifically, the time domain signal mapped to the second frequency domain sequence includes N second modulation symbols, and the second modulation symbol is an amplitude shift keying modulation symbol.

A modulation scheme of the second modulation symbol is the same as that of the first modulation symbol.

Similar to the foregoing first OFDM time domain signal including the N first modulation symbols arranged in time domain, that the time domain signal mapped to the second frequency domain sequence includes N second modulation symbols may also be understood as that the time domain signal mapped to the second frequency domain sequence includes the N second modulation symbols arranged in time domain, or may be understood as that the time domain signal mapped to the second frequency domain sequence can carry the N second modulation symbols, for example, the time domain signal mapped to the second frequency domain sequence carries one second modulation symbol for a period of time in time domain, or may be understood as that the time domain signal mapped to the second frequency domain sequence is represented by the N second modulation symbols, or may be understood as that the time domain signal mapped to the second frequency domain sequence includes a signal corresponding to the N second modulation symbols.

It should be noted that, in this embodiment of this application, a specific form of the time domain signal mapped to the second frequency domain sequence including the N second modulation symbols is not limited, and the N second modulation symbols include at least one amplitude shift keying modulation symbol 1 and one amplitude shift keying modulation symbol 0.

For example, when the second modulation symbol is an OOK modulation symbol, the N second modulation symbols include at least one OOK modulation symbol 1 and one OOK modulation symbol 0. An OOK modulation symbol with a high amplitude, a high envelope, a high level, or high energy is referred to as an OOK modulation symbol 1, or an OOK modulation symbol ON; and an OOK modulation symbol with a low amplitude, an envelope, a level, or energy is referred to as an OOK modulation symbol 0, or an OOK modulation symbol OFF.

For another example, when the second modulation symbol is an ASK modulation symbol, the N second modulation symbols include at least one ASK modulation symbol 1 and one ASK modulation symbol 0. An ASK modulation symbol with a high amplitude, an envelope, a level, or energy is referred to as an ASK modulation symbol 1, or an ASK modulation symbol ON; and an ASK modulation symbol with a low amplitude, an envelope, a level, or energy is referred to as an ASK modulation symbol 0, or an ASK modulation symbol OFF.

In a possible implementation, when the first frequency domain sequence is different from the second frequency domain sequence, that the transmitting end device generates the first frequency domain sequence based on a second frequency domain sequence includes:

The transmitting end device generates M third frequency domain sequences based on the second frequency domain sequence; and

the transmitting end device generates the first frequency domain sequence based on the M third frequency domain sequences, where

M and N satisfy the following relationship:

N = MP , where P is a positive integer. For example, P is equal to 1, 2, or 4.

In a possible implementation, P is 1 or an even number; or $P=2^x$, and x is a nonnegative integer. When P=1, it is equivalent to that there is no line code coding. When P>1, P is a factor of the line code coding. To be specific, P bits are obtained through the line code coding performed on one original information bit. A value of the factor P of the line code coding is considered, so that a bit carried in the N first modulation symbols included in the OFDM time domain signal sent by a transmitting end device side meets a coding form of line code. This helps improve demodulation performance of information detected by the receiving end. A larger value of P indicates better demodulation performance.

It should be noted that the transmitting end device generates the first frequency domain sequence based on the second frequency domain sequence, so that a storage amount of the transmitting end device and complexity of the transmitting end device can be reduced. A reason may be as follows.

The N amplitude shift keying modulation symbols carried in the first OFDM time domain signal have a plurality of values, each value corresponds to one frequency domain sequence (the first frequency domain sequence) in frequency domain. For example, N=8, and one value of eight OOK modulation symbols is {10000000}, and the other value is {10000001}. A frequency domain sequence corresponding to a value of the N amplitude shift keying modulation symbols is a frequency domain sequence obtained by performing time-frequency transform on time domain signals of the N amplitude shift keying modulation symbols. The time-frequency transform may be Fourier transform. For example, time domain sampling and interpolation are performed on the time domain signals of the N amplitude shift keying modulation symbols, and then the time domain signals are transformed to the frequency domain through FFT, to obtain the frequency domain sequence.

If a frequency domain sequence corresponding to each value of the N amplitude shift keying modulation symbols is stored at the transmitting end, the storage amount of the transmitting end device and the complexity of the transmitting end device are increased. However, when the first frequency domain sequence is generated based on the second frequency domain, the frequency domain sequence corresponding to each value of the N amplitude shift keying modulation symbols does not need to be stored, so that the storage amount of the transmitting end device and the complexity of the transmitting end device are reduced.

Specifically, that the transmitting end device generates the first frequency domain sequence based on the M third frequency domain sequences includes:
The transmitting end device adds the M third frequency domain sequences to obtain the first sequence.

For example, M second frequency domain sequences are added to obtain a fourth frequency domain sequence, and the first frequency domain sequence is determined by normalization of a square sum of moduli of elements in the fourth frequency domain sequence. The normalization of the square sum of the modulus may be understood as follows: A value of a sum of modular squares of all elements in the fourth frequency domain sequence is X, and each element in the fourth frequency domain sequence is divided by a square root of X, so that the value of the sum of modular squares of the sequence elements is normalized.

For example, a relationship between the second frequency domain sequence and the M third frequency domain sequences includes the following two types:

Type 1:

There is a cyclic shift relationship between the second frequency domain sequence and each of the M third frequency domain sequences in time domain.

For example, that there is the cyclic shift relationship between the second frequency domain sequence and the third frequency domain sequence in time domain may be understood as follows: A time domain signal mapped to the third frequency domain sequence may be obtained by performing a cyclic shift on a time domain signal mapped to the second frequency domain sequence.

For example, the second frequency domain sequence is mapped to subcarriers, and an OOK modulation symbol {10000000} is obtained through IFFT transform to the time domain. One frequency domain sequence in the M third frequency domain sequences is mapped to the subcarriers, and an OOK modulation symbol {00010000} is obtained through IFFT transform to the time domain. {00010000} may be obtained by performing a 3-bit cyclic shift on {10000000} in time domain, and therefore, a cyclic shift value is 3.

For another example, a time domain signal mapped to another frequency domain sequence in the M third frequency domain sequences is {00001000}. {00001000} may be obtained by performing a 4-bit cyclic shift on { 1000000} in time domain, and therefore, a cyclic shift value is 4.

When the relationship between the second frequency domain sequence and the M third frequency domain sequences is the type 1, that the transmitting end device generates M third frequency domain sequences based on the second frequency domain sequence includes:

The transmitting end device generates the M third frequency domain sequences based on the second frequency domain sequence and M phase factors, where

an i$^{th}$ frequency domain sequence in the M third frequency domain sequences is generated based on the second frequency domain sequence and an i$^{th}$ phase factor e$^{j\varphi i}$ in the M phase factors, and after being cyclically shifted by a length of T$_i$ amplitude shift keying modulation symbols in time domain, the time domain signal mapped to the second frequency domain sequence is a time domain signal mapped to the i$^{th}$ frequency domain sequence; and e$^{j\varphi i}$ and T$_i$ satisfy the following formula: $e^{j\varphi_i} = e^{j\frac{2\pi}{N}*T_i}$.

For example, when the OOK modulation symbol is {00010000} that is obtained by performing a 3-bit cyclic shift on { 10000000} in time domain, T$_i$ is equal to 3.

For another example, when the OOK modulation symbol is {00001000} that is obtained by performing a 4-bit cyclic shift on {10000000} in time domain, T$_i$ is equal to 4.

Specifically, a k$^{th}$ element b$_k$ in the i$^{th}$ frequency domain sequence, a k$^{th}$ element a$_k$ in the second frequency domain sequence, and the i$^{th}$ phase factor e$^{j\varphi i}$ in the M phase factors satisfy the following relationship:

$$b_k = a_k * e^{j\frac{2\pi}{Q}k} * e^{j\varphi_i}$$

, where k is a positive integer less than or equal to L, and L is a length of the third frequency domain sequence; and

$e^{j\frac{2\pi}{Q}k}$ represents phase weighting corresponding to the k$^{th}$ element, and Q is a positive integer.

For example, L is less than or equal to a quantity of subcarriers corresponding to a quantity of PRBs occupied by one third frequency domain sequence mapped to the frequency domain. For example, when one PRB is occupied in frequency domain, L is less than or equal to 12.

Type 2:

L first elements included in the second frequency domain sequence are the same as L second elements included in one of the M third frequency domain sequences, and the L first elements and the L second elements are mapped to the frequency domain in a same order or different orders.

For example, an order of mapping the L first elements to the frequency domain may be understood as an order of mapping the first elements (for example, {a$_0$,a$_1$,...,a$_{L-1}$}) to subcarriers e$_0$,e$_1$,...,e$_{L-1}$, and an order of mapping the L second elements to the frequency domain may be understood as an order of mapping the second elements (for example, {a$_{L-1}$,...,a$_1$,a$_0$}) to subcarriers e$_0$,e$_1$,...,e$_{L-1}$.

For example, the transmitting end may determine, based on the time domain signal mapped to the second frequency domain sequence in time domain and the time domain signal mapped to the third frequency domain sequence in time domain, that an order of mapping elements included in the second frequency domain sequence to the frequency domain is the same as or different from an order of mapping elements included in the third frequency domain sequence to the frequency domain.

For example, the second frequency domain sequence is mapped to subcarriers, and an OOK modulation symbol {10000000} is obtained through IFFT transform to the time domain. One third frequency domain sequence in the M third frequency domain sequences is mapped to the subcarriers, and an OOK modulation symbol {00000001} is obtained through IFFT transform to the time domain. It may be understood as that the order of mapping the elements included in the second frequency domain sequence to the frequency domain is opposite to the order of mapping the elements included in the third frequency domain to the frequency domain.

For ease of understanding, with reference to FIG. 7, the following uses a specific example to describe how the transmitting end device generates the first frequency domain sequence based on the second frequency domain sequence. FIG. 7 is a schematic flowchart of generating a first frequency domain sequence according to an embodiment of this application.

The following steps are included.

S710: Determine a second frequency domain sequence.

In a possible implementation, the second frequency domain sequence in this embodiment of this application may be generated by a transmitting end device.

For example, the transmitting end device determines the second frequency domain sequence (or referred to as a base sequence) from constellation points in any one of the following modulation schemes:

BPSK, QPSK, 16QAM, 64QAM, or 256QAM.

For example, the transmitting end device determines a plurality of BPSK constellation points in BPSK constellation points as the second frequency domain sequence.

For example, the transmitting end device determines a plurality of 16QAM constellation points in 16QAM constellation points as the second frequency domain sequence.

For example, the transmitting end device determines a plurality of QPSK constellation points in QPSK constellation points as the second frequency domain sequence.

It should be understood that the foregoing modulation scheme is merely an example, and does not constitute any limitation on the protection scope of this application. The modulation scheme in this application may alternatively be another modulation scheme. Details are not described herein again.

Specifically, a specific procedure in which the transmitting end device determines the second frequency domain sequence includes:

First, the transmitting end device determines that one OFDM time domain signal in time domain includes N second modulation symbols.

For ease of description, the following uses N=8 as an example for description. When N is another value, the following procedure is similar to that of N=8, and details are not described again.

Then, the transmitting end device determines a basic pattern of the N second modulation symbols in the OFDM time domain signal. The basic pattern means that in one OFDM time domain signal, a waveform of a symbol duration (for example, several 1/N symbol durations) with a high level is represented as "1", and a waveform of a symbol duration (for example, several 1/N symbol durations) with a low level is represented as "0".

For example, N=8, and the basic pattern of the N second modulation symbols is {10000000}. N=8 represents that one OFDM time domain signal needs to carry eight OOK symbols. A time domain length of each OOK modulation symbol is 1/N=1/8 of a length of an OFDM time domain signal. For example, the subcarrier spacing is 15 KHz, and the quantity of IFFT points is Q=64. A quantity of time domain sampling points included in each of the eight OOK symbols is K=Q/N=8. Each OOK modulation symbol is considered as a 1/8 OFDM time domain signal.

Then, the transmitting end device determines time domain sampling points based on the basic pattern of the N second modulation symbols, and performs FFT transform on a time domain signal including the time domain sampling points. For example, a pattern of the eight second modulation symbol is {10000000}, each modulation symbol corresponds to eight time domain sampling points, and values of the eight time domain sampling points are the same. For example, if the $1^{st}$ OOK modulation symbol is 1, the eight time domain sampling points corresponding to the $1^{st}$ OOK modulation symbol are eight time domain sampling points with the same value, for example, eight time domain sampling points with the value of 1. 64 time domain sampling points may be obtained by using eight modulation symbols. The transmitting end device performs 64-point FFT transform on the 64 time domain sampling points to obtain a transformed frequency domain sequence $\{z_1, z_2, ..., z_{64}\}$.

There are the following two manners of obtaining the second frequency domain sequence by using the frequency domain sequence $\{z_1, z_2, ..., z_{64}\}$.

Manner 1: The transmitting end device extracts 12 elements $\{z_{27}, z_{28}, ..., z_{38}\}$ in the middle of the sequence as the second frequency domain sequence.

Manner 2: A symbol mapped to a subcarrier is required to be a modulation (for example, PSK or QAM) constellation point. For example, the symbol mapped to the subcarrier is required to be a 64QAM constellation point. In this case, each element of $\{z_{27}, z_{28}, ..., z_{38}\}$ is quantized to a constellation point that is in a modulation scheme (for example, 64QAM) and that has a closest Euclidean distance. For example, $z_{27}$ is equal to 6.34-2.63j, and the 64QAM constellation point closest to $z_{27}$ is 7-3j. In this case, $z_{27}$ is quantized to 7-3j. In this case, a sequence obtained after $\{z_{27}, z_{28}, ..., z_{38}\}$ is quantized based on the modulation scheme is used as the second frequency domain sequence.

The transmitting end device maps the obtained second frequency domain sequence to the time domain to obtain an OFDM time domain signal including an OOK modulation symbol { 10000000}. FIG. 8 is a pattern of a time domain signal mapped to a second frequency domain sequence in time domain.

In another possible implementation, the second frequency domain sequence in this embodiment of this application may be predefined in a protocol. The transmitting end device may learn of a second frequency domain sequence based on the second frequency domain sequence predefined in the protocol.

After the transmitting end device determines the second frequency domain sequence, the transmitting end device can generate M third frequency domain sequences based on the second frequency domain sequence. A method procedure shown in FIG. 7 further includes the following steps.

S720: Generate the M third frequency domain sequences.

Specifically, the generating the M third frequency domain sequences includes the following two manners.

Manner 1: Corresponding to the foregoing $1^{st}$ relationship.

There is a cyclic shift relationship between the second frequency domain sequence and each of the M third frequency domain sequences in time domain.

In this manner 1, a procedure of generating the M third frequency domain sequences includes:

Step 1: The transmitting end device determines a phase factor set $\{\varphi_1, \varphi_2,...,\varphi_M\}$.

Specifically, the transmitting end device determines that a to-be-sent first OFDM time domain signal includes N first modulation symbols arranged in time domain, for example, an OOK modulation symbol {10011001}.

A method for determining, by the transmitting end device, a to-be-sent bit in one OFDM time domain signal may be: determining, based on a to-be-sent information bit, an information bit obtained through line code coding. For example, a Manchester coding factor is 2, information bits are {0101}, an original information bit 1 is coded as 10, an original information bit 0 is coded as 01, and coded bits are {10011001}.

The transmitting end device determines the phase factor set $\{\varphi_1,\varphi_2,...,\varphi_M\}$ based on a relationship between a time domain signal mapped to the second frequency domain sequence and the N first modulation symbols that are arranged in time domain and that are included in the to-be-sent first OFDM time domain signal. For ease of understanding, an example in which the time domain signal mapped to the second frequency domain sequence includes an OOK modulation symbol {10000000}, and the N first modulation symbols that are arranged in time domain and that are included in the first OFDM time domain signal are the OOK modulation symbol {10011001} is used for description.

When N is equal to 8, and the N second modulation symbols included in the second frequency domain sequence are the OOK modulation symbol {10000000}, {10000000} is shifted by zero 1/N OFDM time domain signal durations to obtain {10000000}, {10000000} is shifted by three 1/N OFDM time domain signal durations to obtain {00010000}, {10000000} is shifted by four 1/N OFDM time domain signal durations to obtain {00001000}, and {10000000} is shifted by seven 1/N OFDM time domain signal durations to obtain {00000001}, where {10000000}, {00010000}, {00001000} and {00000001} can be superimposed in time domain to obtain {10011001}, so that { 10011001} needs to be formed by superposing time domain signals obtained by shifting zero, three, four, and seven durations based on { 10000000} respectively.

A principle of phase rotation in frequency domain may be obtained based on a time domain cyclic shift. Based on the foregoing cyclic shift value set {0, 3, 4, 7}, it is determined that a phase factor set $\{\varphi_1,\varphi_2,...,\varphi_M\}$ that needs to be multiplied by a frequency domain sequence is $\{\frac{\pi}{4}*0, \frac{\pi}{4}*3, \frac{\pi}{4}*4, \frac{\pi}{4}*7\}$, where $\frac{\pi}{4}$ is $\frac{2\pi}{N}$, and in this example, M=4, and N=8.

It should be noted that the OOK modulation symbol included in time domain signal mapped to the second frequency domain sequence is {10000000}, and the N first modulation symbols that are included in the first OFDM time domain signal and that are arranged in time domain are {10011001}, which are merely examples. This application does not constitute any limitation on the protection scope of this application.

For example, when the N first modulation symbols that are included in the first OFDM time domain signal and that are arranged in time domain are { 10011001}, and the N second modulation symbols included in the second frequency domain sequence are {10010000}, {10010000} is shifted by zero 1/N OFDM time domain signal durations to obtain {10010000}, and {10010000} is shifted by four 1/N OFDM time domain signal durations to obtain {00001001}, where {10010000} and {00001001} can be superimposed in time domain to obtain {10011001}, so that {10011001} is formed by superposing time domain signals obtained by shifting zero and four durations based on {10000000} respectively. A phase factor set $\{\varphi_1,\varphi_2,...,\varphi_M\}$ is $\{\frac{\pi}{4}*0, \frac{\pi}{4}*4\}$, where $\frac{\pi}{4}$ is $\frac{2\pi}{N}$, and in this example, M=2 and N=8.

A case in which the N second modulation symbols included in the second frequency domain sequence are other time domain signals is similar, and details are not described herein again.

Step 2: Generate the M third frequency domain sequences.

The transmitting end device obtains the M third frequency domain sequences based on the phase factor set $\{\varphi_1,\varphi_2,...,\varphi_M\}$ determined in step 1.

Specifically, phase transformation is performed on a $k^{th}$ element $a_k$ in the second frequency domain sequence

$$b_k = a_k * e^{j\frac{2\pi}{Q}k} * e^{j\varphi_i}$$

to obtain a $k^{th}$ element in the third frequency domain sequence, where Q is a quantity of IFFT points. For example, a value of Q may be 256. Q is a quantity of IFFT points that are obtained through IFFT transform to a time domain signal after a frequency domain sequence is mapped to a subcarrier, and Q may be a positive integer to the power of 2.

An example in which one third frequency domain sequence is generated by the second frequency domain sequence and one phase factor is used for description.

Elements included in the second frequency domain sequence are $\{a_0,a_1,...,a_{L-1}\}$, where L is a positive integer, and represents a length of the second frequency domain sequence.

Elements included in the third frequency domain sequence in the M third frequency domain sequences are $\{b_0,b_1,...,b_{L-1}\}$. It is assumed that a time domain signal (for example, {00010000}) mapped to the third frequency domain sequence can be obtained by performing a 3-bit cyclic shift on a time domain signal (for example, { 10000000}) mapped to the second frequency domain sequence.

$$b_0 = a_0 * e^{j\frac{2\pi}{Q}0} * e^{j\frac{3}{4}\pi}, \quad b_1 = a_1 * e^{j\frac{2\pi}{Q}1} * e^{j\frac{3}{4}\pi}, \quad \cdots, \quad b_{L-1} = a_{L-1} * e^{j\frac{2\pi}{Q}L-1} * e^{j\frac{3}{4}\pi}.$$

Optionally, an OFDM time domain signal including an OOK modulation symbol {00010000} may be obtained by mapping the obtained third frequency domain sequence to the time domain. FIG. 9 is a pattern of a time domain signal mapped to a third frequency domain sequence in time domain.

A manner of generating another frequency domain sequence in the M third frequency domain sequences is similar to the foregoing manner of generating the third frequency domain sequence. Details are not described herein again.

Manner 2: Correspond to the foregoing 2nd relationship.

Elements included in the second frequency domain sequence are the same as those included in each of the M third frequency domain sequences, but orders of mapping the elements to the frequency domain are the same or different.

In this manner 1, a procedure of generating the M third frequency domain sequences includes:

Step 1: The transmitting end device determines the order of mapping the elements to the frequency domain.

Specifically, the transmitting end device determines that a to-be-sent first OFDM time domain signal includes N first modulation symbols arranged in time domain, for example, {10000001} .

The transmitting end device determines, based on a relationship between a time domain signal mapped to the second frequency domain sequence and the N first modulation symbols that are included in the to-be-sent first OFDM time domain signal and that are arranged in time domain, an order of mapping elements included in each of the M third frequency domain sequences to the frequency domain.

For ease of understanding, an example in which the time domain signal mapped to the second frequency domain sequence is an OOK modulation symbol {10000000}, and the N first modulation symbols that are arranged in time domain and that are included in the first OFDM time domain signal are an OOK modulation symbol {10000001} is used for description.

When the N second modulation symbols included in the second frequency domain sequence are {10000000}, {10000001} can be obtained by superimposing {10000000} and {00000001} in time domain, and {00000001} and {10000000} are in an opposite relationship in time domain. Therefore, it can be learned that the M third frequency domain sequences include two third frequency domain sequences. Elements included in one third frequency domain sequence are the same as those included in the second frequency domain sequence, and an order of mapping the elements to the frequency domain is the same as an order of mapping elements included in the second frequency domain sequence to the frequency domain. Elements included in the other third frequency domain sequence are the same as those included in the second frequency domain sequence, but an order of mapping the elements included in the other third frequency domain sequence to the frequency domain is opposite to the order of mapping the elements included in the second frequency domain sequence to the frequency domain.

It should be noted that the time domain signal mapped to the second frequency domain sequence is {10000000}, and the N first modulation symbols that are included in the first OFDM time domain signal and that are arranged in time domain are { 10011001}, which are merely examples and do not constitute any limitation on the protection scope of this application.

For example, when the N first modulation symbols that are included in the first OFDM time domain signal and that are arranged in time domain are { 10011001}, and the N second modulation symbols included in the second frequency domain sequence are {10010000}, {10011001} can be obtained by superposing {10010000} and {00001001} in time domain, and {10010000} and {00001001} are in an opposite relationship in time domain. Therefore, it can be learned that the M third frequency domain sequences include two third frequency domain sequences. Elements included in one third frequency domain sequence are the same as those included in the second frequency domain sequence, and an order of mapping the elements to frequency domain subcarriers is the same as an order of mapping elements included in the second frequency domain sequence to the frequency domain subcarriers. Elements included in the other third frequency domain sequence are the same as those included in the second frequency domain sequence, but an order of mapping the elements included in the other third frequency domain sequence to the frequency domain subcarriers is opposite to the order of mapping the elements included in the second frequency domain sequence to the frequency domain subcarriers. An amplitude order of a time domain signal (for example, an OOK modulation symbol) mapped to the other third frequency domain sequence in time domain is opposite to an amplitude order of a time domain signal (for example, an OOK modulation symbol) mapped to the second frequency domain sequence in time domain.

A case in which the N second modulation symbols included in the second frequency domain sequence are other time domain signals is similar, and details are not described herein again.

Step 2: Generate the M third frequency domain sequences.

The transmitting end device obtains the M third frequency domain sequences based on the order of mapping the elements to the frequency domain subcarriers determined in step 1.

For example, the M third frequency domain sequences include two third frequency domain sequences. Elements included in one third frequency domain sequence are the same as those included in the second frequency domain sequence, and an order of mapping the elements to frequency domain subcarriers is the same as an order of mapping elements included in the second frequency domain sequence to the frequency domain subcarriers. Elements included in the other third frequency domain sequence are the same as those included in the second frequency domain sequence, but an order of mapping the elements included in the other third frequency domain sequence to the frequency domain subcarriers is opposite to the order of mapping the elements included in the second frequency domain sequence to the frequency domain subcarriers.

In other words, when the elements $\{a_0, a_1, ..., a_{L-1}\}$ included in the second frequency domain sequence are mapped to the frequency domain subcarriers $e_0, e_1, ..., e_{L-1}$ in a one-to-one manner, the elements $\{a_0, a_1, ..., a_{L-1}\}$ included in one third frequency domain sequence are mapped to the frequency domain subcarriers $e_0, e_1, ..., e_{L-1}$ in the one-to-one manner, and the elements $\{a_{L-1}, ..., a_1, a_0\}$ included in the other third frequency domain sequence are mapped to the frequency domain subcarriers $e_0, e_1, ..., e_{L-1}$ in the one-to-one manner.

S730: Generate the first frequency domain sequence.

The transmitting end device adds the generated M third frequency domain sequences, performs power normalization on elements in the sequence obtained through addition, and then maps the elements to frequency domain subcarriers to obtain the first frequency domain sequence.

In an example, corresponding to the manner 1 in step S720, the M third frequency domain sequences are respectively the second frequency domain sequence (referred to as a third frequency domain sequence #1 below), a third frequency domain sequence (referred to as a third frequency domain sequence #2 below) generated by the second frequency domain sequence and a phase factor $\dfrac{\pi}{4} * 3$, another third frequency domain sequence (referred to as a third frequency domain sequence #3 below) generated by the second frequency domain sequence and a phase factor $\dfrac{\pi}{4} * 4$, and still another third frequency domain sequence (referred to as a third frequency domain sequence #4 below) generated by the second frequency domain sequence and a phase factor $\dfrac{\pi}{4} * 7$.

The third frequency domain sequence #1, the third frequency domain sequence #2, the third frequency domain sequence #3, and the third frequency domain sequence #4 are added to obtain a fourth frequency domain sequence #1, and power normalization is performed on elements in the fourth frequency domain sequence #1 and the elements are mapped to the frequency domain subcarriers to obtain the first frequency domain sequence.

For ease of understanding, an example in which the second frequency domain sequence is $\{a_0, a_1, ..., a_{L-1}\}$ and an OOK modulation symbol included in a time domain signal mapped to the second frequency domain sequence is $\{10000000\}$ is used for description.

For example, if the second frequency domain sequence is $\{a_0, a_1, ..., a_{L-1}\}$, the third frequency domain sequence #1 is $\{a_0, a_1, ..., a_{L-1}\}$, the third frequency domain sequence #2 is

$$\left\{ a_0 * e^{j\frac{2\pi}{Q}0} * e^{j\frac{3}{4}\pi}, a_1 * e^{j\frac{2\pi}{Q}1} * e^{j\frac{3}{4}\pi}, ..., a_{L-1} * e^{j\frac{2\pi}{Q}L-1} * e^{j\frac{3}{4}\pi} \right\}$$

, the third frequency domain sequence #3 is

$$\left\{ a_0 * e^{j\frac{2\pi}{Q}0} * e^{j\frac{4}{4}\pi}, a_1 * e^{j\frac{2\pi}{Q}1} * e^{j\frac{4}{4}\pi}, ..., a_{L-1} * e^{j\frac{2\pi}{Q}L-1} * e^{j\frac{4}{4}\pi} \right\}$$

, and the third frequency domain sequence #4 is

$$\left\{ a_0 * e^{j\frac{2\pi}{Q}0} * e^{j\frac{7}{4}\pi}, a_1 * e^{j\frac{2\pi}{Q}1} * e^{j\frac{7}{4}\pi}, ..., a_{L-1} * e^{j\frac{2\pi}{Q}L-1} * e^{j\frac{7}{4}\pi} \right\}$$

. The fourth frequency domain sequence #1 is $\{\{g_0, g_1, ..., g_{L-1}\}$, where

$$g_0 = a_0 + a_0 * e^{j\frac{2\pi}{Q}0} * e^{j\frac{3}{4}\pi} + a_0 * e^{j\frac{2\pi}{Q}0} * e^{j\frac{4}{4}\pi} + a_0 * e^{j\frac{2\pi}{Q}0} * e^{j\frac{7}{4}\pi}$$

,

$$g_l = a_l + a_l * e^{j\frac{2\pi}{Q}l} * e^{j\frac{3}{4}\pi} + a_l * e^{j\frac{2\pi}{Q}l} * e^{j\frac{4}{4}\pi} + a_l * e^{j\frac{2\pi}{Q}l} * e^{j\frac{7}{4}\pi}$$

and

$$g_{L-1} = a_{L-1} + a_{L-1} * e^{j\frac{2\pi}{Q}L-1} * e^{j\frac{3}{4}\pi} + a_{L-1} * e^{j\frac{2\pi}{Q}L-1} * e^{j\frac{4}{4}\pi} + a_{L-1} * e^{j\frac{2\pi}{Q}L-1} * e^{j\frac{7}{4}\pi}$$

. The first frequency domain sequence is obtained after power normalization is performed on $g_0, g_1, ..., g_{L-1}$.

Further, the obtained first frequency domain sequence may be mapped to corresponding frequency domain subcarriers, and an OFDM time domain signal including an OOK modulation symbol {10011001} may be obtained through IFFT transform to the time domain. FIG. 10 is a pattern of a time domain signal mapped to a first frequency domain sequence in time domain.

For example, for a specific manner of mapping the first frequency domain sequence to the OFDM time domain signal in time domain, refer to FIG. 6 above. Details are not described herein again.

In another example, corresponding to the manner 2 in step S720, the M third frequency domain sequences are a third frequency domain sequence #5 and a third frequency domain sequence #6. An order of mapping elements in the third frequency domain sequence #5 to frequency domain subcarriers is the same as an order of mapping the second frequency domain sequence to the frequency domain subcarriers. An order of mapping elements in the third frequency domain sequence #6 to the frequency domain subcarriers is opposite to an order of mapping the second frequency domain sequence to the frequency domain subcarriers.

The third frequency domain sequence #5 and the third frequency domain sequence #6 are added to obtain a fourth frequency domain sequence #2, and power normalization is performed on elements in the fourth frequency domain sequence #2 and the elements are mapped to the frequency domain subcarriers to obtain the first frequency domain sequence.

For ease of understanding, an example in which the second frequency domain sequence is $\{a_0, a_1, ..., a_{L-1}\}$ and an OOK modulation symbol included in a time domain signal mapped to the second frequency domain sequence is {10000000} is used for description.

For example, if the second frequency domain sequence $\{a_0, a_1, ..., a_{L-1}\}$ is separately mapped to subcarriers $e_0, e_1, ..., e_{L-1}$, the third frequency domain sequence #5$\{a_0, a_1, ..., a_{L-1}\}$ is separately mapped to the subcarriers $e_0, e_1, ..., e_{L-1}$, and the third frequency domain sequence #6$\{a_{L-1}, ...a_1, a_0\}$, is separately mapped to subcarriers $e_1, e_2, ..., e_L$. The fourth frequency domain sequence #2$\{h_0, h_1, ..., h_{L-1}\}$ is separately mapped to the subcarriers $e_0, e_1, ..., e_{L-1}$, where $h_0 = a_0 + a_{L-1}$, $h_1 = a_1 + a_{L-2}$, ..., and $h_{L-1} = a_{L-1} + a_0$. The first frequency domain sequence is obtained after power normalization is performed on $h_0, h_1, ..., h_{L-1}$.

Further, the obtained first frequency domain sequence may be mapped to corresponding frequency domain subcarriers, and a pattern of an OFDM time domain signal including an OOK modulation symbol {10000001} may be obtained through IFFT transform to the time domain. FIG. 11 is another pattern of a time domain signal mapped to a first frequency domain sequence in time domain.

Sequence numbers of the foregoing processes do not mean execution sequences in the foregoing method embodiments. The execution sequences of the processes should be determined based on functions and internal logic of the processes, and should not be construed as any limitation on the implementation processes of embodiments of this application. In addition, it is possible that not all operations in the foregoing method embodiments need to be performed.

It should be understood that the receiving end device and/or the transmitting end device in the foregoing method embodiments may perform some or all of the steps in the embodiments. These steps or operations are merely examples. In embodiments of this application, other operations or variants of the various operations may be further included.

It may be understood that, in the foregoing method embodiments, the method implemented by the receiving end device may also be implemented by a component (for example, a chip or a circuit) of the receiving end device, and the method implemented by the transmitting end device may also be implemented by a component of the transmitting end device.

It should be further understood that in various embodiments of this application, unless otherwise specified or logically conflicted, terms and/or descriptions in different embodiments may be consistent and may be referenced by each other. The technical features in different embodiments may be combined to form a new embodiment according to their internal logical relationships.

The foregoing describes in detail the communication method in embodiments of this application with reference to FIG. 4 and FIG. 7. The foregoing communication method is mainly described from a perspective of interaction between the transmitting end device and the receiving end device. It may be understood that, to implement the foregoing functions, the transmitting end device and the receiving end device include corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail a communication apparatus provided in embodiments of this application with reference to FIG. 12 and FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmitting end device or the receiving end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 12 is a block diagram of an apparatus 1200 according to an embodiment of this application. The apparatus 1200 includes a transceiver unit 1210, a processing unit 1220, and a storage unit 1230. The transceiver unit 1210 may implement a corresponding communication function, and the transceiver unit 1210 may also be referred to as a communication interface or a communication unit. The processing unit 1220 is configured to perform data processing. The storage unit 1230 is configured to store instructions and/or data, and the processing unit 1220 may read the instructions and/or the data in the storage unit, so that the apparatus implements the foregoing method embodiments.

The apparatus 1200 may be configured to perform an action performed by the device (for example, the transmitting end device or the receiving end device) in the foregoing method embodiments. In this case, the apparatus 1200 may be a device or a component that can be configured in a device. The transceiver unit 1210 is configured to perform a receiving and sending-related operation of the device in the foregoing method embodiments. The processing unit 1220 is configured to perform a device processing-related operation in the foregoing method embodiments.

In a design, the apparatus 1200 is configured to perform an action performed by the transmitting end device in the foregoing method embodiments.

The processing unit 1220 is configured to generate a first orthogonal frequency division multiplexing OFDM time domain signal, where the first OFDM time domain signal includes N first modulation symbols arranged in time domain, and the first modulation symbol is an amplitude shift keying modulation symbol; and

the transceiver unit 1210 is configured to send the first OFDM time domain signal to the receiving end device.

Optionally, that the processing unit 1220 generates the first OFDM time domain signal includes:

The processing unit 1220 generates a first frequency domain sequence, where there is a mapping relationship between the first frequency domain sequence and the N first modulation symbols; and the processing unit 1220 generates the first OFDM time domain signal based on the first frequency domain sequence.

Optionally, that the processing unit 1220 generates a first frequency domain sequence includes:

The processing unit 1220 generates the first frequency domain sequence based on a second frequency domain sequence, where a time domain signal mapped to the first frequency domain sequence includes a part of or all time domain signals mapped to the second frequency domain sequence.

Optionally, the time domain signal mapped to the second frequency domain sequence includes N second modulation symbols, the second modulation symbol is an amplitude shift keying modulation symbol, and the N second modulation symbols include at least one amplitude shift keying modulation symbol 1 and one amplitude shift keying modulation symbol 0.

Optionally, that the processing unit 1220 generates the first frequency domain sequence based on a second frequency domain sequence includes:

The processing unit 1220 generates M third frequency domain sequences based on the second frequency domain sequence; and the processing unit 1220 generates the first frequency domain sequence based on the M third frequency domain sequences, where there is a cyclic shift relationship between the second frequency domain sequence and each of the M third frequency domain sequences in time domain.

Optionally, that the processing unit 1220 generates the first frequency domain sequence based on the M third frequency domain sequences includes:

The processing unit 1220 adds the M third frequency domain sequences to obtain the first frequency domain sequence.

Optionally, that the processing unit 1220 generates M third frequency domain sequences based on the second frequency domain sequence includes:

The processing unit 1220 generates the M third frequency domain sequences based on the second frequency domain sequence and M phase factors, where an $i^{th}$ frequency domain sequence in the M third frequency domain sequences is generated based on the second frequency domain sequence and an $i^{th}$ phase factor $e^{j\varphi_i}$ in the M phase factors, and after being cyclically shifted by a length of $T_i$ amplitude shift keying modulation symbols in time domain, the time domain signal mapped to the second frequency domain sequence is a time domain signal mapped to the $i^{th}$ frequency domain

$$e^{j\varphi_i} = e^{j\frac{2\pi}{N}*T_i}$$

sequence; and $e^{j\varphi_i}$ and $T_i$ satisfy the following formula:                              .

Optionally, a $k^{th}$ element $b_k$ in the $i^{th}$ frequency domain sequence, a $k^{th}$ element $a_k$ in the second frequency domain sequence, and the $i^{th}$ phase factor $e^{j\varphi_i}$ in the M phase factors satisfy the following equation:

$$b_k = a_k * e^{j\frac{2\pi}{Q}k} * e^{j\varphi_i}$$ , where

Q is a positive integer, k is a positive integer less than or equal to L, and L is a length of the third frequency domain sequence.
Optionally, that the processing unit 1220 generates the first frequency domain sequence based on a second frequency domain sequence includes:
The processing unit 1220 generates M third frequency domain sequences based on the second frequency domain sequence; and the processing unit 1220 generates the first frequency domain sequence based on the M third frequency domain sequences, where L first elements included in the second frequency domain sequence are the same as L second elements included in one of the M third frequency domain sequences, and the L first elements and the L second elements are mapped to frequency domain in different orders, where L is a positive integer.
Optionally, the L first elements and the L second elements are mapped to the frequency domain in reverse orders.
Optionally, M and N satisfy the following relationship: N = MP , where P is a positive integer.
Optionally, the transceiver unit 1210 is further configured to send indication information, where the indication information indicates at least one of the following:

N, a relationship between a duration of each of the N first modulation symbols and a duration of the first OFDM time domain signal, or a subcarrier spacing corresponding to the duration of the first OFDM time domain signal; or
at least one of N, a relationship between a duration of each of the N first modulation symbols and a duration of the first OFDM time domain signal, and a subcarrier spacing corresponding to the duration of the first OFDM time domain signal is predefined.

Optionally, the N first modulation symbols do not overlap each other in time domain.
The apparatus 1200 may implement the steps or procedures performed by the transmitting end device in the method embodiments according to embodiments of this application. The apparatus 1200 may include units configured to perform the method performed by the transmitting end device in the method embodiments. In addition, the units in the apparatus 1200 and the foregoing other operations and/or functions are separately for implementing corresponding procedures in the method embodiments of the transmitting end device in the method embodiments.
When the apparatus 1200 is configured to perform the method in FIG. 4, the transceiver unit 1210 may be configured to perform an information sending step in the method, for example, step S420; and the processing unit 1220 may be configured to perform processing steps in the method, for example, steps S411 and S410.
When the apparatus 1200 is configured to perform the method in FIG. 7, the processing unit 1220 may be configured to perform processing steps in the method, for example, steps S710, S720, and S730.
It should be understood that a specific process in which the units perform the foregoing corresponding steps is described in detail in the foregoing method embodiments, and for brevity, details are not described herein.
In another design, the apparatus 1200 is configured to perform an action performed by the receiving end device in the foregoing method embodiments.
The transceiver unit 1210 is configured to receive a first orthogonal frequency division multiplexing OFDM time domain signal; and
the processing unit 1220 is configured to determine that the first OFDM time domain signal includes N first modulation symbols arranged in time domain, where the first modulation symbol is an amplitude shift keying modulation symbol, where N is an integer greater than or equal to 2.
Optionally, the transceiver unit 1210 is further configured to receive indication information, where the indication information indicates at least one of the following: N, a relationship between a duration of each of the N first modulation symbols and a duration of the first OFDM time domain signal, or a subcarrier spacing corresponding to the duration of the first OFDM time domain signal; or

at least one of N, a relationship between a duration of each of the N first modulation symbols and a duration of the first OFDM time domain signal, and a subcarrier spacing corresponding to the duration of the first OFDM time domain signal is predefined.

The apparatus 1200 may implement the steps or procedures performed by the receiving end device in the method embodiments according to embodiments of this application. The apparatus 1200 may include units configured to perform the method performed by the receiving end device in the method embodiments. In addition, the units in the apparatus 1200 and the foregoing other operations and/or functions are separately for implementing corresponding procedures in the method embodiments of the receiving end device in the method embodiments.

When the apparatus 1200 is configured to perform the method in FIG. 4, the transceiver unit 1210 may be configured to perform an information receiving step in the method, for example, step S420.

It should be understood that a specific process in which the units perform the foregoing corresponding steps is described in detail in the foregoing method embodiments, and for brevity, details are not described herein.

The processing unit 1220 in the foregoing embodiment may be implemented by at least one processor or a processor-related circuit. The transceiver unit 1210 may be implemented by a transceiver or a transceiver-related circuit. The storage unit may be implemented by at least one memory.

As shown in FIG. 13, an embodiment of this application further provides an apparatus 1300. The apparatus 1300 includes a processor 1310, and may further include one or more memories 1320.

The processor 1310 is coupled to the memory 1320. The memory 1320 is configured to store a computer program or instructions and/or data. The processor 1310 is configured to execute the computer program or the instructions and/or the data stored in the memory 1320, so that the method in the foregoing method embodiments is performed.

Optionally, as shown in FIG. 13, the apparatus 1300 may further include a transceiver 1330. The transceiver 1330 is configured to receive and/or send a signal. For example, the processor 1310 is configured to control the transceiver 1330 to receive and/or send the signal.

The processor 1310 in FIG. 13 may be the processing unit 1220 in FIG. 12, to implement a function of the processing unit 1220. For details about an operation performed by the processor 1310, refer to the foregoing descriptions of the processing unit 1220. Details are not described herein again. The transceiver 1330 in FIG. 13 may be the transceiver unit 1210 in FIG. 12, to implement a function of the transceiver unit 1210. For details about an operation performed by the transceiver 1330, refer to the foregoing descriptions of the transceiver unit 1210. Details are not described herein again. The memory 1320 in FIG. 13 may be the storage unit 1230 in FIG. 12, to implement a function of the storage unit 1230.

Optionally, the apparatus 1300 includes one or more processors 1310.

Optionally, the memory 1320 and the processor 1310 may be integrated, or disposed separately.

In a solution, the apparatus 1300 is configured to implement an operation performed by the device (for example, the foregoing receiving end device or transmitting end device) in the foregoing method embodiments.

An embodiment of this application further provides a computer-readable storage medium. The computer-readable storage medium stores computer instructions for implementing the method performed by the device (for example, the foregoing receiving end device or transmitting end device) in the foregoing method embodiments.

For example, when the computer program is executed by a computer, the computer is enabled to implement the method performed by the transmitting end device in the foregoing method embodiments.

An embodiment of this application further provides a computer program product including instructions. When the instructions are executed by a computer, the computer is enabled to implement the method performed by the device (for example, the foregoing receiving end device or transmitting end device) in the foregoing method embodiments.

An embodiment of this application further provides a communication system. The communication system includes the device (for example, the foregoing receiving end device or transmitting end device) in the foregoing embodiments.

An embodiment of this application further provides a chip apparatus, including a processing circuit. The processing circuit is configured to invoke a program from a memory and run the program, so that a communication device in which the chip apparatus is installed implements the method performed by the device (for example, the foregoing receiving end device or transmitting end device) in the foregoing method embodiments.

For explanations and beneficial effects of related content in any one of the foregoing provided apparatuses, refer to the corresponding method embodiments provided above. Details are not described herein again.

It should be understood that the processor mentioned in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other suitable type of memory.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a transmitting end device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A communication method, comprising:

    generating a first orthogonal frequency division multiplexing OFDM time domain signal, wherein the first OFDM time domain signal comprises N first modulation symbols arranged in time domain, and the first modulation symbol is an amplitude shift keying modulation symbol; and
    sending the first OFDM time domain signal, wherein
    N is an integer greater than or equal to 2.

2.  The method according to claim 1, wherein the generating a first OFDM time domain signal comprises:

    generating a first frequency domain sequence, wherein there is a mapping relationship between the first frequency domain sequence and the N first modulation symbols; and
    generating the first OFDM time domain signal based on the first frequency domain sequence.

3.  The method according to claim 2, wherein the generating a first frequency domain sequence comprises:
    generating the first frequency domain sequence based on a second frequency domain sequence, wherein a time domain signal mapped to the first frequency domain sequence comprises a part of or all time domain signals mapped to the second frequency domain sequence.

4.  The method according to claim 3, wherein the time domain signal mapped to the second frequency domain sequence comprises N second modulation symbols, the second modulation symbol is an amplitude shift keying modulation symbol, and the N second modulation symbols comprise at least one amplitude shift keying modulation symbol 1 and one amplitude shift keying modulation symbol 0.

5.  The method according to claim 3 or 4, wherein the generating the first frequency domain sequence based on a second frequency domain sequence comprises:

    generating M third frequency domain sequences based on the second frequency domain sequence; and
    generating the first frequency domain sequence based on the M third frequency domain sequences, wherein there is a cyclic shift relationship between the second frequency domain sequence and each of the M third frequency domain sequences in time domain.

6.  The method according to claim 5, wherein the generating the first frequency domain sequence based on the M third frequency domain sequences comprises:
    adding the M third frequency domain sequences to obtain the first frequency domain sequence.

7.  The method according to claim 5 or 6, wherein the generating M third frequency domain sequences based on the second frequency domain sequence comprises:

    generating the M third frequency domain sequences based on the second frequency domain sequence and M phase factors, wherein
    an $i^{th}$ frequency domain sequence in the M third frequency domain sequences is generated based on the second frequency domain sequence and an $i^{th}$ phase factor $e^{j\varphi i}$ in the M phase factors, and after being cyclically shifted by a length of $T_i$ amplitude shift keying modulation symbols in time domain, the time domain signal mapped to the second frequency domain sequence is a time domain signal mapped to the $i^{th}$ frequency domain sequence; and
    $e^{j\varphi i}$ and $T_i$ satisfy the following formula:

    $$e^{j\varphi_i} = e^{j\frac{2\pi}{N}*T_i}.$$

8.  The method according to claim 7, wherein a $k^{th}$ element $b_k$ in the $i^{th}$ frequency domain sequence, a $k^{th}$ element $a_k$ in the second frequency domain sequence, and the $i^{th}$ phase factor $e^{j\varphi i}$ in the M phase factors satisfy the following equation:

$$b_k = a_k * e^{j\frac{2\pi}{Q}k} * e^{j\varphi_i},$$

wherein

Q is a positive integer, k is a positive integer less than or equal to L, and L is a length of the $i^{th}$ frequency domain sequence.

9. The method according to claim 3 or 4, wherein the generating the first frequency domain sequence based on a second frequency domain sequence comprises:

generating M third frequency domain sequences based on the second frequency domain sequence; and generating the first frequency domain sequence based on the M third frequency domain sequences, wherein L first elements comprised in the second frequency domain sequence are the same as L second elements comprised in one of the M third frequency domain sequences, and the L first elements and the L second elements are mapped to frequency domain in different orders, wherein L is a positive integer.

10. The method according to claim 9, wherein the L first elements and the L second elements are mapped to frequency domain in reverse orders.

11. The method according to any one of claims 5 to 10, wherein M and N satisfy the following relationship:
N = MP , wherein P is a positive integer.

12. The method according to any one of claims 1 to 11, wherein the method further comprises:
sending indication information, wherein the indication information indicates at least one of the following:

N, a relationship between a duration of each of the N first modulation symbols and a duration of the first OFDM time domain signal, or a subcarrier spacing corresponding to the duration of the first OFDM time domain signal; or at least one of N, a relationship between a duration of each of the N first modulation symbols and a duration of the first OFDM time domain signal, and a subcarrier spacing corresponding to the duration of the first OFDM time domain signal is predefined.

13. The method according to any one of claims 1 to 12, wherein the first OFDM time domain signal indicates one of the following identifiers:

an identifier of a terminal device;
an identifier of a terminal device group to which the terminal device belongs;
a part of the identifier of the terminal device; or
a part of the identifier of the terminal device group to which the terminal device belongs.

14. The method according to any one of claims 1 to 13, wherein the N first modulation symbols do not overlap each other in time domain.

15. A communication method, comprising:

receiving a first orthogonal frequency division multiplexing OFDM time domain signal; and
determining that the first OFDM time domain signal comprises N first modulation symbols arranged in time domain, wherein the first modulation symbol is an amplitude shift keying modulation symbol, wherein
N is an integer greater than or equal to 2.

16. The method according to claim 15, wherein the method further comprises:
receiving indication information, wherein the indication information indicates at least one of the following:

N, a relationship between a duration of each of the N first modulation symbols and a duration of the first OFDM time domain signal, or a subcarrier spacing corresponding to the duration of the first OFDM time domain signal; or at least one of N, a relationship between a duration of each of the N first modulation symbols and a duration of the first OFDM time domain signal, and a subcarrier spacing corresponding to the duration of the first OFDM time domain signal is predefined.

EP 4 418 588 A1

**17.** The method according to claim 15 or 16, wherein the first OFDM time domain signal indicates one of the following identifiers:

an identifier of a terminal device;
an identifier of a terminal device group to which the terminal device belongs;
a part of the identifier of the terminal device; or
a part of the identifier of the terminal device group to which the terminal device belongs.

**18.** A communication apparatus, comprising:

a processing unit, configured to generate a first orthogonal frequency division multiplexing OFDM time domain signal, wherein the first OFDM time domain signal comprises N first modulation symbols arranged in time domain, and the first modulation symbol is an amplitude shift keying modulation symbol; and
a sending unit, configured to send the first OFDM time domain signal, wherein
N is an integer greater than or equal to 2.

**19.** The apparatus according to claim 18, wherein that a processing unit generates a first OFDM time domain signal comprises:

the processing unit generates a first frequency domain sequence, wherein there is a mapping relationship between the first frequency domain sequence and the N first modulation symbols; and
the processing unit generates the first OFDM time domain signal based on the first frequency domain sequence.

**20.** The apparatus according to claim 19, wherein that the processing unit generates a first frequency domain sequence comprises:
the processing unit generates the first frequency domain sequence based on a second frequency domain sequence, wherein a time domain signal mapped to the first frequency domain sequence comprises a part of or all time domain signals mapped to the second frequency domain sequence.

**21.** The apparatus according to claim 20, wherein the time domain signal mapped to the second frequency domain sequence comprises N second modulation symbols, the second modulation symbol is an amplitude shift keying modulation symbol, and the N second modulation symbols comprise at least one amplitude shift keying modulation symbol 1 and one amplitude shift keying modulation symbol 0.

**22.** The apparatus according to claim 20 or 21, wherein that the processing unit generates the first frequency domain sequence based on a second frequency domain sequence comprises:

the processing unit generates M third frequency domain sequences based on the second frequency domain sequence; and
the processing unit generates the first frequency domain sequence based on the M third frequency domain sequences, wherein
there is a cyclic shift relationship between the second frequency domain sequence and each of the M third frequency domain sequences in time domain.

**23.** The apparatus according to claim 22, wherein that the processing unit generates the first frequency domain sequence based on the M third frequency domain sequences comprises:
the processing unit adds the M third frequency domain sequences to obtain the first frequency domain sequence.

**24.** The apparatus according to claim 22 or 23, wherein that the processing unit generates M third frequency domain sequences based on the second frequency domain sequence comprises:

the processing unit generates the M third frequency domain sequences based on the second frequency domain sequence and M phase factors, wherein
an $i^{th}$ frequency domain sequence in the M third frequency domain sequences is generated based on the second frequency domain sequence and an $i^{th}$ phase factor $e^{j\varphi i}$ in the M phase factors, and after being cyclically shifted by a length of $T_i$ amplitude shift keying modulation symbols in time domain, the time domain signal mapped to the second frequency domain sequence is a time domain signal mapped to the $i^{th}$ frequency domain sequence; and $e^{j\varphi i}$ and $T_i$ satisfy the following formula:

31

$$e^{j\varphi_i} = e^{j\frac{2\pi}{N}*T_i}.$$

25. The apparatus according to claim 24, wherein a $k^{th}$ element $b_k$ in the $i^{th}$ frequency domain sequence, a $k^{th}$ element $a_k$ in the second frequency domain sequence, and the $i^{th}$ phase factor $e^{j\varphi i}$ in the M phase factors satisfy the following equation:

$$b_k = a_k * e^{j\frac{2\pi}{Q}k} * e^{j\varphi_i},$$

wherein
Q is a positive integer, k is a positive integer less than or equal to L, and L is a length of the third frequency domain sequence.

26. The apparatus according to claim 20 or 21, wherein that the processing unit generates the first frequency domain sequence based on a second frequency domain sequence comprises:

the processing unit generates M third frequency domain sequences based on the second frequency domain sequence; and
the processing unit generates the first frequency domain sequence based on the M third frequency domain sequences, wherein
L first elements comprised in the second frequency domain sequence are the same as L second elements comprised in one of the M third frequency domain sequences, and the L first elements and the L second elements are mapped to frequency domain in different orders, wherein L is a positive integer.

27. The apparatus according to claim 26, wherein the L first elements and the L second elements are mapped to frequency domain in reverse orders.

28. The apparatus according to any one of claims 22 to 27, wherein M and N satisfy the following relationship:
N = MP , wherein P is a positive integer.

29. The apparatus according to any one of claims 18 to 28, wherein the sending unit is further configured to send indication information, wherein the indication information indicates at least one of the following:

N, a relationship between a duration of each of the N first modulation symbols and a duration of the first OFDM time domain signal, or a subcarrier spacing corresponding to the duration of the first OFDM time domain signal; or
at least one of N, a relationship between a duration of each of the N first modulation symbols and a duration of the first OFDM time domain signal, and a subcarrier spacing corresponding to the duration of the first OFDM time domain signal is predefined.

30. The apparatus according to any one of claims 18 to 29, wherein the N first modulation symbols do not overlap each other in time domain.

31. The apparatus according to any one of claims 18 to 30, wherein the first OFDM time domain signal indicates one of the following identifiers:

an identifier of a terminal device;
an identifier of a terminal device group to which the terminal device belongs;
a part of the identifier of the terminal device; or
a part of the identifier of the terminal device group to which the terminal device belongs.

32. A communication apparatus, comprising:

a receiving unit, configured to receive a first orthogonal frequency division multiplexing OFDM time domain signal; and
a processing unit, configured to determine that the first OFDM time domain signal comprises N first modulation symbols arranged in time domain, wherein the first modulation symbol is an amplitude shift keying modulation symbol, wherein

N is an integer greater than or equal to 2.

33. The apparatus according to claim 32, wherein the receiving unit is further configured to receive indication information, wherein the indication information indicates at least one of the following:

N, a relationship between a duration of each of the N first modulation symbols and a duration of the first OFDM time domain signal, or a subcarrier spacing corresponding to the duration of the first OFDM time domain signal; or at least one of N, a relationship between a duration of each of the N first modulation symbols and a duration of the first OFDM time domain signal, and a subcarrier spacing corresponding to the duration of the first OFDM time domain signal is predefined.

34. The apparatus according to claim 32 or 33, wherein the first OFDM time domain signal indicates one of the following identifiers:

an identifier of a terminal device;

an identifier of a terminal device group to which the terminal device belongs;

a part of the identifier of the terminal device; or

a part of the identifier of the terminal device group to which the terminal device belongs.

35. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 14.

36. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 15 to 17.

37. A computer-readable storage medium, wherein the computer-readable storage medium stores a computer program, and when the computer program is run on a computer, the computer is enabled to perform the method according to any one of claims 1 to 14.

38. A computer-readable storage medium, wherein the computer-readable storage medium stores a computer program, and when the computer program is run on a computer, the computer is enabled to perform the method according to any one of claims 15 to 17.

39. A computer program product, wherein the computer program product comprises computer program code, and when the computer program code is run on a computer, the method according to any one of claims 1 to 14 is performed.

40. A computer program product, wherein the computer program product comprises computer program code, and when the computer program code is run on a computer, the method according to any one of claims 15 to 17 is performed.

41. A chip system, comprising a processor, configured to invoke a computer program from a memory and run the computer program, to enable a communication device on which the chip system is installed to perform the method according to any one of claims 1 to 14.

42. A chip system, comprising a processor, configured to invoke a computer program from a memory and run the computer program, to enable a communication device on which the chip system is installed to perform the method according to any one of claims 15 to 17.

43. A communication system, comprising at least one apparatus according to any one of claims 18 to 31 and at least one apparatus according to any one of claims 32 to 34.

FIG. 1

FIG. 2

71.4 μs

1

71.4 μs

0

FIG. 3

Network device

Terminal device

S411: Generate a first frequency domain sequence

S410: Generate a first OFDM time domain signal

S420: First OFDM time domain signal

FIG. 4

First OFDM time domain signal

T

1st OOK
modulation symbol

Nth OOK
modulation symbol

(a)

First OFDM time domain signal

T

1st OOK
modulation symbol

Nth OOK
modulation symbol

(b)

Interval between the 1st
and the 2nd OOK
modulation symbols

First OFDM time domain signal

T

1st OOK
modulation symbol

2nd OOK
modulation symbol

Nth OOK
modulation symbol

(c)

FIG. 5

12
subcarriers

IFFT

66.7 µs

Add a CP

4.7 µs     66.7 µs

1

0

4.7 µs

66.7 µs

FIG. 6

Determine a second
frequency domain
sequence
S710

Generate M third
frequency domain
sequences
S720

Generate a first
frequency domain
sequence
S730

FIG. 7

FIG. 8

FIG. 9

FIG. 10

FIG. 11

1200

Transceiver unit — 1210

Processing unit — 1220

Storage unit — 1230

FIG. 12

1300

Processor — 1310

Transceiver — 1330

Memory 1320 — 1320

FIG. 13

## INTERNATIONAL SEARCH REPORT

International application No.

**PCT/CN2022/129598**

### A. CLASSIFICATION OF SUBJECT MATTER

H04L 5/00(2006.01)i;  H04L 27/26(2006.01)i;  H04L 27/04(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNTXT; CNKI; WPABS; VEN; ENTXTC: 正交频分复用, 时域信号, 幅移键控, 开关键控, 启闭键控, 低功耗, 唤醒, OFDM, IFFT, ASK, OOK, WUS, WUR

### C. DOCUMENTS CONSIDERED TO BE RELEVANT

| Category* | Citation of document, with indication, where appropriate, of the relevant passages | Relevant to claim No. |
|---|---|---|
| X | CN 111343120 A (CHENGDU HUAWEI TECHNOLOGIES CO., LTD.) 26 June 2020 (2020-06-26)<br>  description, paragraphs [0064]-[0122] | 1, 2, 13-15, 17-19, 30-32, 34-43 |
| X | US 10863437 B1 (NEWRACOM INC.) 08 December 2020 (2020-12-08)<br>  description, column 16, line 18-column 20, line 29 | 1, 2, 13-15, 17-19, 30-32, 34-43 |
| X | CN 113498598 A (IDAC HOLDINGS, INC.) 12 October 2021 (2021-10-12)<br>  description, paragraphs [0098]-[0157] | 1, 2, 13-15, 17-19, 30-32, 34-43 |
| X | CN 109314929 A (HUAWEI TECHNOLOGIES CO., LTD.) 05 February 2019 (2019-02-05)<br>  description, paragraphs [0057]-[0116] | 1, 2, 13-15, 17-19, 30-32, 34-43 |
| A | WO 2018101766 A1 (LG ELECTRONICS INC.) 07 June 2018 (2018-06-07)<br>  entire document | 1-43 |
| A | WO 2021004697 A1 (TELEFONAKTIEBOLAGET LM ERICSSON (PUBL)) 14 January 2021 (2021-01-14)<br>  entire document | 1-43 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 December 2022** | **14 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/129598**

| Patent document cited in search report | | | Publication date (day/month/year) | Patent family member(s) | | | Publication date (day/month/year) |
|---|---|---|---|---|---|---|---|
| CN | 111343120 | A | 26 June 2020 | WO | 2020125455 | A1 | 25 June 2020 |
| US | 10863437 | B1 | 08 December 2020 | | None | | |
| CN | 113498598 | A | 12 October 2021 | WO | 2020172549 | A1 | 27 August 2020 |
| | | | | US | 2022095228 | A1 | 24 March 2022 |
| | | | | EP | 3928482 | A1 | 29 December 2021 |
| | | | | JP | 2022521331 | A | 06 April 2022 |
| CN | 109314929 | A | 05 February 2019 | WO | 2018141254 | A1 | 09 August 2018 |
| | | | | KR | 20190067849 | A | 17 June 2019 |
| | | | | US | 2020220641 | A1 | 09 July 2020 |
| | | | | JP | 2020501405 | A | 16 January 2020 |
| | | | | EP | 3513603 | A1 | 24 July 2019 |
| | | | | US | 2018227070 | A1 | 09 August 2018 |
| WO | 2018101766 | A1 | 07 June 2018 | | None | | |
| WO | 2021004697 | A1 | 14 January 2021 | CN | 114026925 | A | 08 February 2022 |
| | | | | JP | 2022540134 | A | 14 September 2022 |
| | | | | US | 2022264458 | A1 | 18 August 2022 |
| | | | | KR | 20220031056 | A | 11 March 2022 |
| | | | | EP | 3997919 | A1 | 18 May 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111301685X